# EUROPEAN PATENT APPLICATION

(11) **EP 1 286 455 A1**
(43) Date of publication of application: **26.02.2003**
(21) Application number: 01908290.8
(22) Date of filing: 05.03.2001
(51) Int. Cl.: H02M 5/27

(54) **PWM CYCLOCONVERTER AND POWER FAULT DETECTOR**

(30) Priority: 08.03.2000 JP 2000063716; 09.03.2000 JP 2000064853; 09.03.2000 JP 2000064854; 10.04.2000 JP 2000108154
(71) Applicant: KABUSHIKI KAISHA YASKAWA DENKI, Kitakyushu-Shi, Fukuoka 806-0004 (JP)
(72) Inventor: YAMAMOTO, Eiji c/o Kabushiki Kaisha Yaskawa Denki, Kitakyushu-shi, Fukuoka 806-0004 (JP); ISHII, Sadao c/o Kabushiki Kaisha Yaskawa Denki, Kitakyushu-shi, Fukuoka 806-0004 (JP); HARA, Hidenori c/o Kabushiki Kaisha Yaskawa Denki, Kitakyushu-shi, Fukuoka 806-0004 (JP); WATANABE, Eiji c/o Kabushiki Kaisha Yaskawa Denki, Kitakyushu-shi, Fukuoka 806-0004 (JP); YAMASAKI, Tetsuya Kabushiki Kaisha Yaskawa Denki, Kitakyushu-shi, Fukuoka 806-0004 (JP); TANAKA, Koji c/o Kabushiki Kaisha Yaskawa Denki, Kitakyushu-shi, Fukuoka 806-0004 (JP)
(74) Representative: Loisel, Bertrand
(86) International application number: JP0101667
(87) International publication number: WO01067590

(57) **Abstract**

A PWM cycloconverter is disclosed that can switch power supplies without interrupting operation in the event of a power supply abnormality. When a power supply abnormality occurs in three-phase AC power supply 1, power supply abnormality detection circuit 30 outputs power supply abnormality detection signal 120, whereby power supply switch 20 selects and outputs the output voltage of uninterruptible power supply 10. Phase detection circuit switch 43 selects and outputs phase information that is output from uninterruptible power supply phase detection circuit 41. Uninterruptible power supply phase detection circuit 41 detects the phase of uninterruptible power supply 10 from before the occurrence of the power supply abnormality, whereby accurate phase information of uninterruptible power supply 10 can be output even immediately after phase detection circuit switch 43 switches the phase information that is output. As a result, operation is not interrupted when switching power supplies.

## Description

### Technical Filed

The present invention relates to a cycloconverter, which is a power converter for directly generating an AC output of any frequency from an AC power supply of fixed frequency, and more particularly to a PWM cycloconverter that employs pulse-width modulation (PWM) control.

### Background Art

In recent years, research and development is being conducted regarding the control of devices such as motors by means of cycloconverters, which are power converters for directly generating, without involving a DC output, an AC output of any frequency from an AC power supply of fixed frequency, and in particular, by means of PWM cycloconverter that employ pulse width modulation (PWM) control. A PWM cycloconverter is also referred to as a "matrix converter."

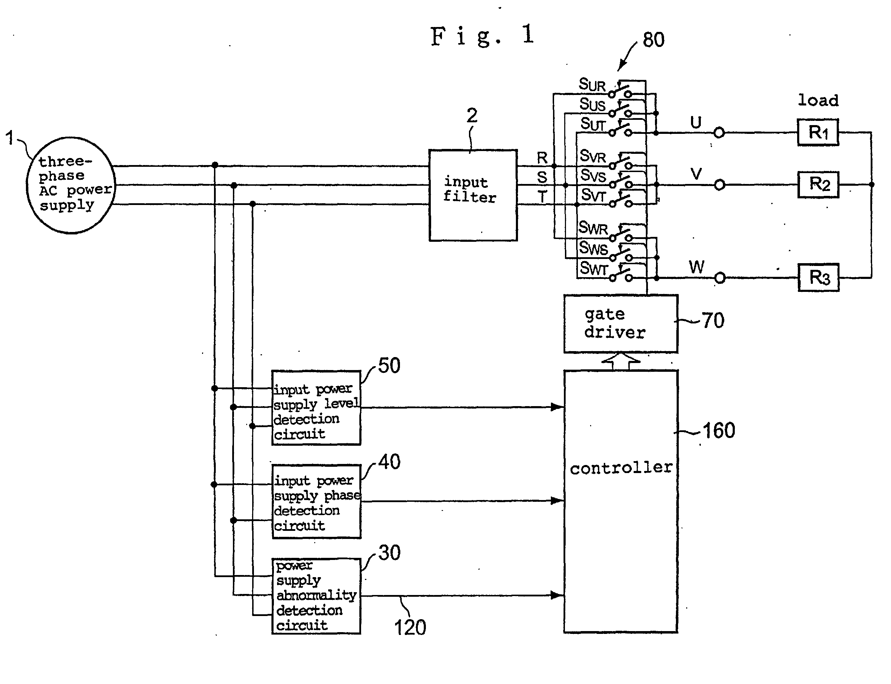

In such a PWM cycloconverter, the input power supply and output are directly connected by way of bidirectional switches that allow the direct bidirectional flow of current. As a result, the operation of the PWM cycloconverter must be halted when an abnormality such as an open phase, a power outage, or a power supply unbalance occurs in the input power supply and normal operation cannot be maintained. Fig. 1 shows a PWM cycloconverter of the prior art in which operation must be halted in the event of an abnormality in the power supply.

This PWM cycloconverter of the prior art is made up by: three-phase AC power supply 1, input filter 2, power supply abnormality detection circuit 30, input power supply phase detection circuit 40, input power supply level detection circuit 50, controller 160, gate driver 70, and bidirectional switch module 80.

Three-phase AC power supply 1 is connected to bidirectional switch module 80 by way of input filter 2. Bidirectional switch module 80 is made up of nine bidirectional switches SUR·SWT for connecting all combinations of the voltages of three phases (R, S, T) of three-phase AC power supply 1 that are applied by way of input filter 2 and the output voltages of three phases (U, V, W) that are output. The outputs of bidirectional switch module 80 are then connected to loads R1·R3.

Controller 160 outputs gate signals to gate driver 70 based on information that is received from input power supply level detection circuit 50 and input power supply phase detection circuit 40. Gate driver 70 drives each of bidirectional switches SUR·SWT of bidirectional switch module 80 based on the gate signals. Input power supply level detection circuit detects the voltage of three-phase AC power supply 1.

Input power supply phase detection circuit 40 receives as input two of the phases of three-phase AC power supply 1 and detects the phase of three-phase AC power supply 1. Input power supply phase detection circuit 40 is made up by transformer 100, comparator 101, phase/frequency detector (PFD) 102, filter 103, voltage-controlled oscillator (VCO) 104, and counter 105.

A two-phase portion of the input voltage from three-phase AC power supply 1 is applied as input to comparator 101 by way of transformer 100, and, by being applied as input to PFD 102, filter 103, VCO 104 and counter 105, becomes phase information. The most significant bit (MSB) of counter 105 is fed back to PFD 102 to constitute a PLL circuit.

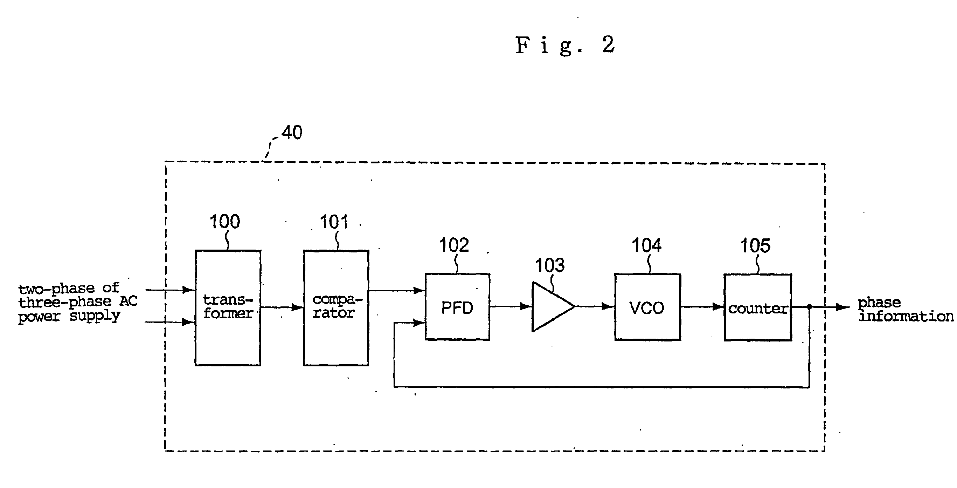

Instead of the circuit shown in Fig. 2, the means for detecting the phase of the input voltage may also be constituted by a circuit that uses a timer to measure from edge to edge of the square wave of the output of comparator 101.

Upon detecting a power supply abnormality in three-phase AC power supply 1, power supply abnormality detection circuit 30 outputs power supply abnormality detection signal 120 to controller 160. Upon receiving power supply abnormality detection signal 120, controller 160 outputs a gate signal for gate driver 70 to halt bidirectional switch module 80.

The prior art PWM cycloconverter described in the foregoing explanation automatically halts operation whenever a power supply abnormality occurs. Depending on the use of the motor, however, continued operation may be necessary even when a power supply abnormality occurs. This type of problem may be solved by providing an emergency power supply such as an ordinary DC power supply or an uninterruptible power supply and then switching from the ordinary power supply to the emergency power supply when a power supply abnormality occurs to continue operation.

The method of realizing the continued operation of a motor in the event of a power supply abnormality according to this solution is next explained using a case in which a PWM inverter is used.

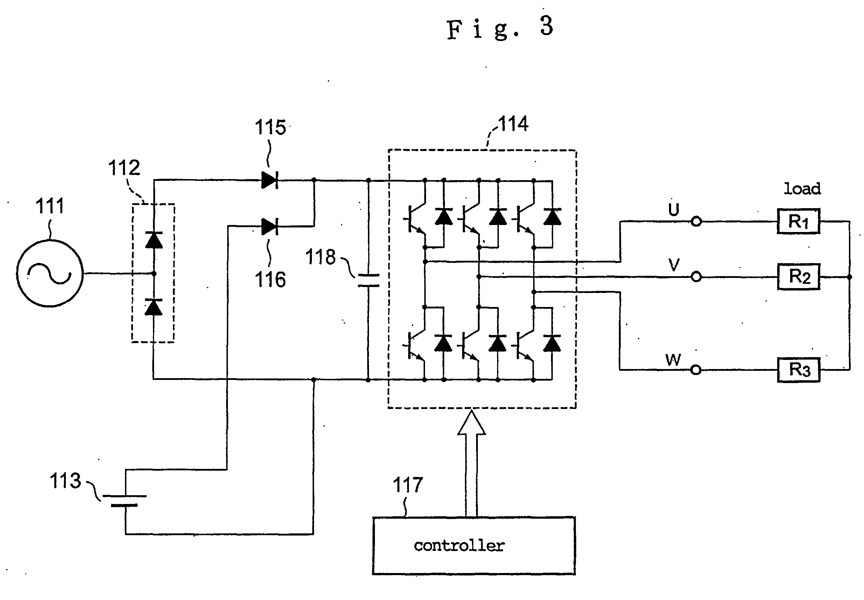

As shown in Fig. 3, this PWM inverter is made up by: AC power supply 111; diode module 112; DC power supply 113, which is the emergency power supply; transistor module 114; diodes 115 and 116; controller 117; and smoothing capacitor 118.

Diode module 112 rectifies the output voltage of AC power supply 1 and converts to DC voltage. Diodes 115 and 116 select the higher voltage of the output voltage of diode module 112 and the output voltage of DC current 113. Controller 117 outputs respective control signals for each of the transistors that constitute transistor module 114 to convert DC voltage to three-phase AC voltage and outputs to loads R1·R3.

When the voltage of AC power supply 111 and the voltage of smoothing capacitor 118 drop in this PWM inverter, DC power supply 113 automatically supplies power to transistor module 114. Thus, in the event of an abnormality in AC power supply 111 and a drop in its output voltage, a switch can be made to DC power supply 113, i.e., the emergency power supply, without any interruption of the operation of the motor that is the load.

Thus, because it includes a DC portion, the PWM inverter is capable of continuing operation in the event of a power supply abnormality by a simple method that consists in providing DC power supply 113 and diodes 115 and 116.

A PWM cycloconverter, however, does not include a DC portion for directly converting an AC power supply to an AC power supply of any frequency. As a result, a PWM cycloconverter is not capable of using components such as diodes to switch the supplied power supply as in a PWM inverter.

In addition, the operation of a PWM cycloconverter cannot be controlled unless the phase information of the input power supply is known. Accordingly, a PWM cycloconverter of the prior art such as shown in Fig. 1 is provided with an uninterruptible three-phase AC power supply as an emergency power supply, and in the event of a power supply abnormality, simply switching the power supply that is used from three-phase AC power supply 1 to the emergency power supply necessitates a halt of operation of the motor, and continuous operation cannot be achieved.

An AC/AC power converter such as the above-described PWM cycloconverter is used as a control device for controlling various frequency-controlled motors. As one actual example, a case is next described in which an AC/AC power converter is used to constitute an elevator driver for controlling the operation of an elevator system.

In an elevator system of the prior art, the control of the motor was performed by means of an elevator driver that employed a PWM inverter as the AC/AC power converter. In this type of elevator system, an emergency power supply was provided to continue the operation of the elevator in the event of a power supply abnormality.

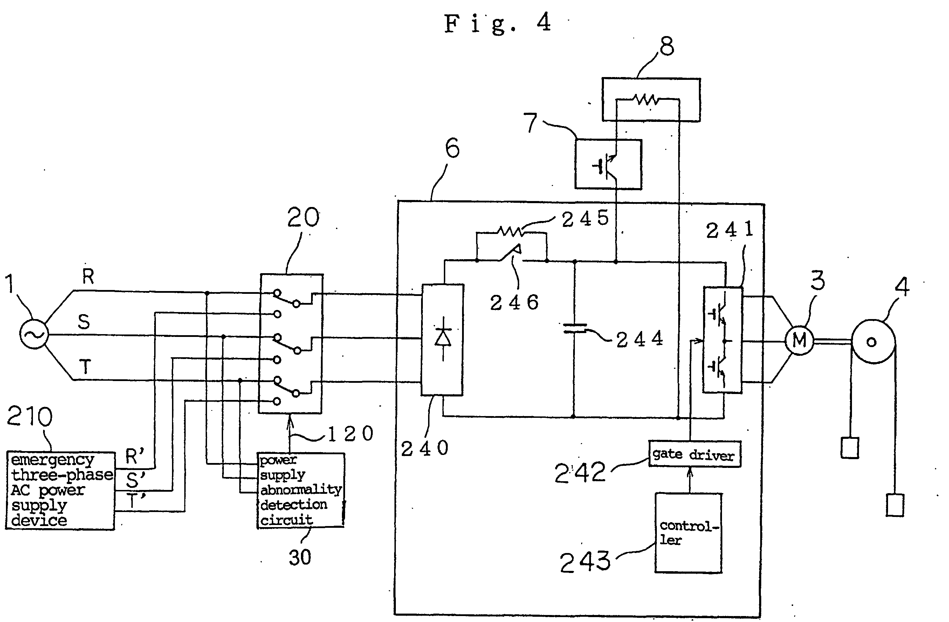

Fig. 4 shows the prior-art elevator system for a case in which a three-phase AC power supply is used as the emergency power supply. This prior art elevator system is constituted by: three-phase AC power supply 1, power supply switch 20, power supply abnormality detection circuit 30, emergency three-phase AC power supply device 210, elevator driver 6 that is made up by a PWM inverter, braking unit 7, braking resistor 8, motor 3, and elevator machinery 4.

Elevator driver 6 is further constituted by: diode rectifying circuit 240, IGBT (Insulated Gate Bipolar Transistor) 241, gate driver 242, controller 243, smoothing capacitor 244, inrush current control resistor 245, and switch 246.

Three-phase AC power supply 1 is connected to the input side of diode rectifying circuit 240 of elevator driver 6 by way of power supply switch 20. The DC voltage that has been rectified by diode rectifying circuit 240 passes through inrush current control resistor 245 or switch 246 and then smoothed by smoothing capacitor 244 and supplied to IGBT 241. IGBT 241 controls motor 3 by switch-controlling the supplied DC voltage in accordance with gate signals from gate driver 242.

Inrush current control resistor 245 is for controlling the inrush current to smoothing capacitor 244, and switch 246 is for short-circuiting inrush current control resistor 245 during normal operation.

In addition, braking unit 7 and braking resistor 8 are connected between the positive bus and negative bus of elevator driver 6 to consume regenerative energy during regenerative operation.

Further, power supply abnormality detection circuit 30 receives as input the three-phase voltage of three-phase AC power supply 1 and outputs power supply abnormality detection signal 120 upon detecting the occurrence of any power supply abnormality in three-phase AC power supply 1.

When not receiving power supply abnormality detection signal 120, power supply switch 20 outputs the output voltages of three phases (R, S, T) from three-phase AC power supply 1 to diode rectifying circuit 240 without alteration, but upon receiving power supply abnormality detection signal 120, outputs the voltage of emergency three-phase AC power supply device 210 that is set as the emergency power supply to diode rectifying circuit 240.

When a power supply abnormality occurs in this elevator driver of the prior art, power supply abnormality detection signal 120 is output from power supply abnormality detection circuit 30, whereby power supply switch 20 switches the voltage that is applied as input to elevator driver 6 from three-phase AC power supply 1 to emergency three-phase AC power supply device 210.

Fig. 5 similarly shows an elevator system that employs elevator driver 6 that is constituted by a PWM inverter for a case in which a single-phase AC power supply is used as the emergency power supply. In Fig. 5, the output voltages of the two phases (R' and S') of emergency single-phase AC power supply device 211 are applied as input to power supply switch 20.

Fig. 6 shows an elevator system that employs elevator driver 6 that is constituted by a PWM inverter for a case in which the emergency power supply is a back-up DC power supply, i.e., a battery.

Battery 212 is connected to the positive bus and negative bus of elevator driver 6 by way of diode 252 and battery switch 251. In addition, three-phase AC power supply 1 is connected to diode rectifying circuit 240 by way of three-phase AC power supply switch 250.

In this elevator system of the prior art, when power supply abnormality detection circuit 30 detects an abnormality of three-phase AC power supply 1 and outputs power supply abnormality detection signal 120, three-phase AC power supply switch 250 is shut off and battery switch 251 is turned on.

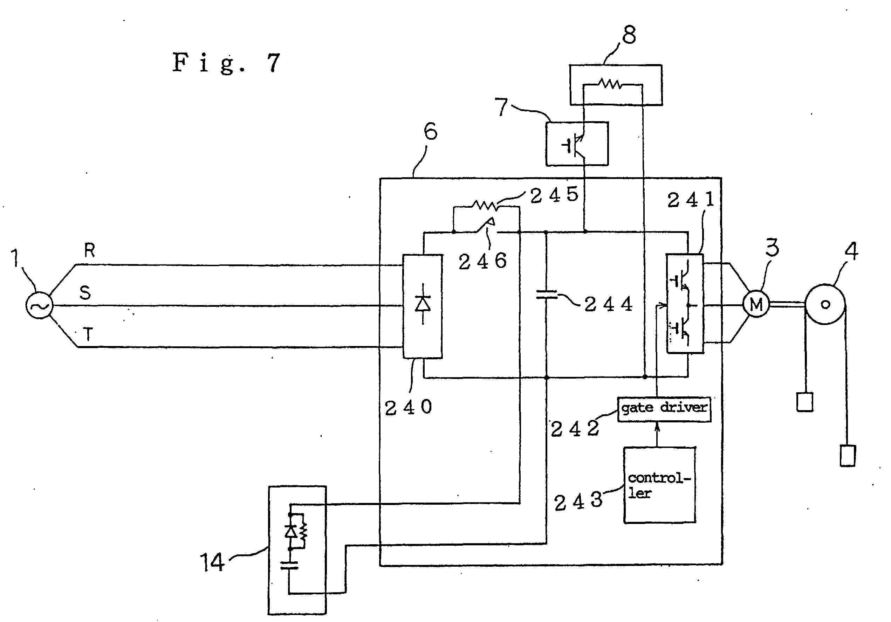

Fig. 7 shows an elevator system that employs elevator driver 6 that is constituted by a PWM inverter for a case in which the emergency power supply is a backup DC power supply such as a large-capacity capacitor. In this elevator system of the prior art, large-capacity capacitor 14 is directly connected to the positive bus and negative bus of elevator driver 6, and a switch is therefore unnecessary.

The elevator system of the prior art that employs elevator driver 6 constituted by the PWM inverter shown in Figs. 4 to 7 required braking unit 7 and braking resistor 8 for regenerative operation. The system therefore had the drawbacks of large structural size and wasted regenerative energy.

Another drawback is the necessity to modify the form of the system configuration depending on the emergency power supply, which may take the form of three-phase AC power supply device 210, single-phase AC power supply device 211, or a DC power supply such as battery 212 or large-capacity capacitor 14.

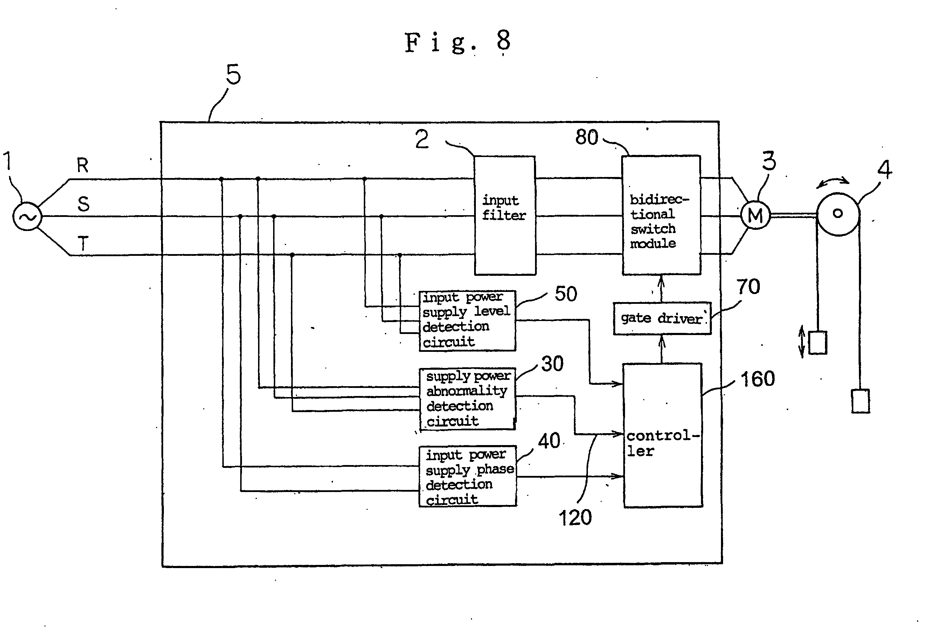

Elevator driver 6 of the prior art has the further drawback of complex system configuration, because power supply switch 20 and power supply abnormality detection circuit 30 must be provided outside elevator driver 6 for emergency operation. Fig. 8 shows an elevator system that employs elevator, driver 5 constituted by the above-described PWM cycloconverter.

This elevator system is made up by: three-phase AC power supply 1, elevator driver 5, motor 3, and elevator machinery 4.

Elevator driver 5 is made up by: input filter 2, power supply abnormality detection circuit 30, input power supply phase detection circuit 40, input power supply level detection circuit 50, controller 160, gate driver 70, and bidirectional switch module 80.

Three-phase AC power supply 1 is connected to bidirectional switch module 80 by way of input filter 21. Bidirectional switch module 80 is made up of nine bidirectional switches for connecting all combinations of the voltages of three phases (R, S, T) of three-phase AC power supply 1 that are applied as input by way of input filter 2 and the output voltages of three phases. The output of bidirectional switch module 80 is connected to each phase of motor 3.

Controller 160 outputs gate signals to gate driver 70 based on information that is applied as input from input power supply level detection circuit 50 and input power supply phase detection circuit 40. Gate driver 70 drives each of the bidirectional switches of bidirectional switch module 80 based on the gate signals that are received from controller 160.

Input power supply level detection circuit 50 detects the voltage of each phase of three-phase AC power supply 1. Input power supply phase detection circuit 40 receives as input two phases of three-phase AC power supply 1 and detects the phases of three-phase AC power supply 1. Power supply abnormality detection circuit 30 outputs power supply abnormality detection signal 120 to controller 160 when any type of power supply abnormality occurs in three-phase AC power supply 1.

Upon receiving power supply abnormality detection signal 120, controller 160 outputs a halt gate signal to gate driver 70 to halt bidirectional switch module 80.

Although an elevator system that is constituted from a PWM cycloconverter as described in the foregoing explanation does not as yet exist, if it were possible to realize such an elevator system, operation could be automatically halted and power supply regenerative operation could be effected in the event of a power supply abnormality, and a control unit or control resistor could thus be eliminated. However, only one input power supply phase detection circuit 40 is provided in the elevator driver of the prior art that is constituted by a PWM cycloconverter as shown in Fig. 8. A PWM cycloconverter, in which control cannot be implemented unless phase information of the input power supply is known, therefore has the drawback that emergency operation that employs an emergency power supply is not possible.

Further, in each type of the above-described PWM cycloconverter or PWM inverter, power supply abnormality detection circuit 30 is provided for detecting power supply abnormalities that occur in three-phase AC power supply 1. However, there are a variety of states in which power supply abnormalities may occur in three-phase AC power supply 1, such as an open-phase state in which the wiring of only one phase of the three phases has been disconnected, a state in which the phase sequence of the power supply has been reversed, or an unbalanced state in which differences occur between the voltages of each phase, and power supply abnormality detection circuit 30 must therefore detect these various power supply abnormalities.

For example, if the phases in the normal three-phase power supply are shifted in 120-degree increments in the order: phase R, phases S, phases T; the state in which the phase sequence of the power supply is reversed refers to a state in which the phase sequence becomes: phase R, phases T, phases S.

In particular, since the input power supply voltages and output voltages are directly connected by the bidirectional switches in the AC-AC direct power converter such as the above-described PWM cycloconverter, the occurrence of an abnormality in the input power supply voltage will also result in an abnormality in the output voltage waveform, whereby satisfactory operation of an AC motor becomes problematic.

Further, in a power converter other than a PWM cycloconverter that takes as input a three-phase AC power supply, continuing operation in an open-phase state has an adverse effect on reliability of the device due to increase in the ripple current of the capacitor of the main circuit in, for example, a transistor inverter.

This type of power converter therefore requires a power supply abnormality detection circuit that can detect by whatever method an open-phase state of the power supply voltage. As a result, various power supply abnormality detection circuits and methods have been proposed for detecting abnormalities of the power supply voltage in a power converter, as shown below.

Japanese Patent Laid-open No. 52-23641 discloses an open-phase detection circuit of a three-phase power supply in which a detection channel that includes a photocoupler is connected between a neutral point and each phase of a three-phase power supply, a monostable multivibrator is activated by output of detection of an open phase, and an output signal is held for a fixed time.

Japanese Patent Laid-open No. 5-68327 discloses a photocoupler for detecting the currents between each phase of a three-phase power supply and a method for determining whether or not an open-phase state exists by collecting the output signals of the photocoupler as one and integrating and then comparing the integrated value with a reference value.

There is also an open-phase determination method in which a resistor is inserted in a diode bridge that converts three-phase voltage input to direct current and a DC portion, whereby a DC detection circuit that detects the flow of current to the resistor enables determination of the existence of an open-phase state when the current flows intermittently.

However, in the methods disclosed in the above-described Japanese Patent Laid-open No. 52-23641 and Japanese Patent Laid-open No. 5-68327, it is not possible to detect a power supply voltage abnormality in which only one phase of a three-phase power supply is open. Further, because none of the above-described power supply abnormality detection circuits or methods enables the detection of a power supply voltage abnormality in which the phase sequence of the power supply is instantaneously reversed, the waveform of the output voltage in an AC/AC direct power converter such as a PWM cycloconverter will be distorted during only such intervals. As a result, a circuit that is capable of detecting whether the phase sequence has been reversed must be added.

In an AC/AC power converter of the prior art that uses a PWM inverter, the PWM inverter is connected to the AC power supply by way of a rectifying circuit, and the maximum voltage of the AC power supply is therefore guaranteed as the input DC voltage. Accordingly, the DC voltage input to the PWM inverter is guaranteed to be at least a fixed value even when the voltage of the AC power supply becomes unbalanced, and the motor can therefore be driven.

However, when a PWM cycloconverter is used as the AC/AC direct power converter, the three-phase AC power supply is directly connected to a load such as a motor by way of bidirectional switches, and an imbalance in the three-phase AC power supply therefore prevents normal operation of the PWM cycloconverter.

### Disclosure of Invention

It is an object of the present invention to provide a PWM cycloconverter that, in the event of a power supply abnormality, can realize continued operation by switching from the normal power supply to an emergency power supply without interrupting operation.

It is another object of the present invention to provide an elevator driver that has a power supply regeneration function and that has any of a three-phase or single-phase AC power supply or a DC power supply such as a battery or large-capacity capacitor as the emergency power supply for enabling operation without alteration of the system configuration when a three-phase AC power supply becomes abnormal.

It is another object of the present invention to provide an elevator driver that is equipped with a power supply switch and power supply abnormality detection circuit for emergency operation not outside the elevator driver but within the elevator driver.

It is yet another object of the present invention to provide a power supply abnormality detection circuit that can detect either of the power supply voltage abnormalities in which only one phase is open or in which the phase sequence is reversed.

It is yet another object of the present invention to provide an AC/AC power converter that is capable of operating normally and continuing the drive of a device such as a motor despite the occurrence of imbalance in the voltages of a three-phase AC power supply.

To achieve the above-described objects, the PWM cycloconverter of the present invention is a PWM cycloconverter that including: a bidirectional switch module that is constituted by nine bidirectional switches for connecting between each of voltages of three phases of a three-phase AC power supply and output voltages of three phases; and an input power supply phase detection circuit for receiving as input two phases of the AC voltages of three phases that are applied as input to the bidirectional switch module and detecting the phase of this input,
characterized in that it includes:
an uninterruptible power supply, which is a single-phase AC power supply;
a power supply abnormality detection circuit for outputting a power supply abnormality detection signal when a power supply abnormality of the three-phase AC power supply has been detected;
a power supply switch for outputting output voltages of three phases from the three-phase AC power supply to the bidirectional switch module when the power supply abnormality detection signal is not received as input, and, when the power supply abnormality detection signal is received, outputting a single-phase AC voltage from the uninterruptible power supply to the bidirectional switch module in place of the output voltages of two phases for which the input power supply phase detection circuit detects phase; and
a control unit for controlling the bidirectional switch module based on phase information that has been detected by the input power supply phase detection circuit, implementing control such that the bidirectional switch module operates under three-phase input when the power supply abnormality detection signal is not received as input, and switching the control mode of the bidirectional switch module from three-phase input operation to single-phase input operation when the power supply abnormality detection signal is received.

According to the present invention, when an abnormality occurs in the three-phase AC power supply, the power supply that is used is switched from a three-phase AC power supply to a single-phase uninterruptible power supply and the control mode of the bidirectional switch module is switched from three-phase operation to single-phase operation, whereby continued operation can be realized by switching the power supply without substantially interrupting operation.

Another PWM cycloconverter of the present invention further includes, in addition to the above-described invention: an uninterruptible power supply phase detection circuit for detecting the phase of the uninterruptible power supply; and a phase detection circuit switch for selecting and outputting phase information that is output from the uninterruptible power supply phase detection circuit when the power supply abnormality detection signal is received as input and selecting and outputting phase information that is output from the input power supply phase detection circuit when the power supply abnormality detection signal is not received; wherein the control unit controls the bidirectional switch module based on phase information that is output from the phase detection circuit switch.

According to the present invention, the phase of the uninterruptible power supply is detected by means of the uninterruptible power supply phase detection circuit from before the occurrence of a power supply abnormality and accurate phase information of the uninterruptible power supply is therefore output even immediately after the phase detection circuit switch switches the phase information that is output, whereby halting of operation can be substantially eliminated when the power supply is switched and continued operation can be realized.

Another PWM cycloconverter according to the present invention is a PWM cycloconverter including: a bidirectional switch module that is constituted by nine bidirectional switches for connecting between each of voltages of three phases of a three-phase AC power supply and output voltages of three phases; and an input power supply phase detection circuit for receiving as input two phases of the AC voltages of three phases that are applied as input to the bidirectional switch module and detecting the phase of this input,
characterized in that it includes:
a DC power supply;
a power supply abnormality detection circuit for outputting a power supply abnormality detection signal when a power supply abnormality of the three-phase AC power supply has been detected;
a power supply switch for outputting output voltages of three phases from the three-phase AC power supply to the bidirectional switch module when the power supply abnormality detection signal is not received as input, and, when the power supply abnormality detection signal is received, outputting DC voltage from the DC power supply to the bidirectional switch module in place of the output voltages of two phases for which the input power supply phase detection circuit detects phase;
a fixed phase information generation circuit;
a phase detection circuit switch for selecting and outputting fixed phase information that is output from the fixed phase information generation circuit when the power supply abnormality detection signal has been received, and selecting and outputting phase information that is output from the input power supply phase detection circuit when the power supply abnormality detection signal is not received; and
a control unit for controlling the bidirectional switch module based on phase information that has been output from the phase detection circuit switch, controlling the bidirectional switch module for three-phase input operation when the power supply abnormality detection signal is not received as input, and switching the control mode of the bidirectional switch module from three-phase input operation to single-phase input operation when the power supply abnormality detection signal is received.

Another PWM cycloconverter according to the present invention is a PWM cycloconverter including:
a bidirectional switch module that is constituted by nine bidirectional switches for connecting between each of voltages of three phases of a three-phase AC power supply and output voltages of three phases;
an input power supply phase detection circuit for receiving as input two phases of the three phases of AC voltages that are applied as input to the bidirectional switch module and detecting the phase of this input; and
a control unit for controlling the bidirectional switch module based on phase information that is detected by means of the input power supply phase detection circuit,
characterized in that it includes:
a power supply abnormality detection circuit for outputting a power supply abnormality detection signal and a switch control signal when a power supply abnormality of the three-phase AC power supply has been detected, halting the output of the power supply abnormality detection signal when the power supply abnormality has been restored to normal, and, after the passage of a fixed time interval, halting the output of the switch control signal;
an uninterruptible power supply module for generating voltages of three phases that are synchronized with the output voltages of the three-phase AC power supply by constantly detecting the phase of the three-phase AC power supply, and, when the power supply abnormality detection signal has been received as input, for outputting voltages of three phases at a fixed cycle based on the phase information that immediately precedes input of the power supply abnormality detection signal; and
a power supply switch for outputting output voltages of three phases from the three-phase AC power supply to the bidirectional switch module when the switch control signal is not received as input, and, when the switch control signal is received, outputting output voltages of three phases from the uninterruptible power supply module to the bidirectional switch module.

In the present invention, AC voltages of three phases that are synchronized to the three-phase AC power supply are constantly generated by an uninterruptible power supply module, whereby three-phase AC operation can be continued without interruption when an abnormality occurs in the three-phase AC power supply. In addition, when the power supply abnormality has been restored to normal, the output of the switch control signal is halted a fixed time after halting of the output of the power supply abnormality detection signal, whereby switching by the power supply switch is effected after synchronizing the AC voltages of three phases that are output from the uninterruptible power supply module and the AC voltages of three phases that are output from the three-phase AC power supply. As a result, the power supplies can be switched without interrupting operation when a power supply abnormality has been restored to normal.

To achieve the above-described object, the elevator driver of the present invention is an elevator driver constituted by a PWM cycloconverter having:
a bidirectional switch module that is constituted by nine bidirectional switches for connecting between each of voltages of three phases of a three-phase AC power supply and output voltages of three phases; and
an input power supply phase detection circuit for receiving as input two phases of the AC voltages of three phases that are applied as input to the bidirectional switch module and detecting the phase of this input,
characterized in that it includes:
a power supply abnormality detection circuit for outputting a power supply abnormality detection signal when a power supply abnormality in the three-phase AC power supply has been detected;
a power supply switch for outputting output voltages of three phases from the three-phase AC power supply to the bidirectional switch module when the power supply abnormality detection signal is not received as input, and, when the power supply abnormality detection signal is received, outputting an output voltage of a power supply that is set as the emergency power supply to the bidirectional switch module;
an emergency power supply phase detection circuit for detecting the phase of the emergency power supply;
a fixed phase information generation circuit for generating and outputting fixed phase information;
a phase detection circuit switch setting unit for selecting and outputting in accordance with settings that have been made beforehand either the phase information from the emergency power supply phase detection circuit or the fixed phase information from the fixed phase information generation circuit;
a phase detection circuit switch for selecting and outputting phase information that is output from the phase detection circuit switch setting unit when the power supply abnormality detection signal is received as input, and for selecting and outputting the phase information that is output from the input power supply phase detection circuit when the power supply abnormality detection signal is not received as input; and
a control unit for controlling the bidirectional switch module based on phase information that has been output from the phase detection circuit switch, implementing control such that the bidirectional switch module operates under three-phase input when the power supply abnormality detection signal is not received as input, and switching the control mode of the bidirectional switch module from three-phase input operation to operation of the control mode that corresponds to the phase information that is output from the phase detection circuit switch when the power supply abnormality detection signal is received as input.

Because the elevator driver is constituted by a PWM cycloconverter, the present invention enables power supply regeneration, operation without connecting a braking unit or braking resistance outside the elevator driver. In addition, the provision of an emergency power supply phase detection circuit that is separate from the input power supply phase detection circuit, and further, the provision of a fixed phase information generation circuit and the use of a phase detection circuit switch to select the phase information that is to be used enables emergency operation without altering the system configuration regardless of which power supply of a three-phase AC power supply, a single-phase AC power supply, and a DC power supply has been set as the emergency power supply. Finally, the system configuration in the present invention is simple because the power supply switch and the power supply abnormality detector are provided in the elevator driver.

To achieve the above-described objects, the power supply abnormality detection circuit of the present invention is a power supply abnormality detection circuit for detecting abnormalities of the power supply voltages of a three-phase AC power supply, and is provided with:
a power supply voltage information generation circuit for detecting information that corresponds to the size relation of the voltages of each phase of the three-phase AC power supply and outputting this information as a power supply voltage information signal;
an abnormality detection signal generation circuit for holding in advance information that is based on the size relations of the voltages of each phase when the three-phase AC power supply is normal, synchronizing the information with the output voltages of the three-phase AC power supply, and outputting this information as an abnormality detection signal; and
a determination circuit for comparing the power supply voltage information signal with the abnormality detection signal at fixed time intervals and outputting a power supply voltage abnormality signal when these signals differ.

In the present invention, the power supply voltage information generation circuit detects information that corresponds to the size relation of the voltages of each phase of three-phase AC power supply and produces a power supply voltage information signal, and in the determination circuit, this power supply voltage information signal is compared with an abnormality detection signal, which is information that is based on the size relations of the voltages of each phase when the three-phase AC power supply is normal. When any type of power supply voltage abnormality occurs in the three-phase AC power supply, differences occur between the signal pattern of the power supply voltage information signal and the signal pattern of the abnormality detection signal. The present invention therefore enables detection of either of the power supply voltage abnormalities in which only one phase is open or in which the phase sequence is reversed.

To achieve the above-described object, the AC/AC direct power converter of the present invention includes:
an input filter for shaping the output waveforms of the three phases of the three-phase AC power supply;
a plurality of bidirectional switches that are connected to signals of three phases that have been wave-shaped by the input filter for effecting power conversion by means of ON/OFF operation;
a PWM control circuit for implementing ON/OFF control of the bidirectional switches based on a voltage command and a frequency command;
a commutation control circuit for controlling commutation of the bidirectional switches;
a voltage detection circuit for detecting and outputting the three line voltages of the three-phase AC power supply;
a maximum voltage generation circuit for generating the maximum line voltage from the line voltages; and
a control circuit for commanding a voltage to the PWM control circuit such that the three-phase output is always equal to or less than the maximum line voltage.

According to the present invention, when the three-phase AC power supply becomes unbalanced and normal operation at a desired output voltage becomes impossible, the AC/AC direct power converter can continue operation by implementing PWM control of the maximum voltage that is possible as the three-phase output in that state.

According to an embodiment of the present invention, the maximum voltage generation circuit may be constituted by a rectifying circuit for rectifying the line voltages and a multiplier for prescribed multiplication of the output of the rectifying circuit; and the control circuit may be constituted by a voltage command unit for commanding a desired voltage and a comparator for comparing the output of the multiplier and the command of the voltage command unit and outputting the smaller of the two.

Another AC/AC direct power converter of the present invention includes:
an input filter for shaping the output waveform of the three phases of the three-phase AC power supply;
a plurality of bidirectional switches that are connected to signals of three phases that have been wave-shaped by the input filter for effecting power conversion by means of ON/OFF operation;
a PWM control circuit for implementing ON/OFF control of the bidirectional switches based on a voltage command and a frequency command;
a commutation control circuit for controlling commutation of the bidirectional switches;
a voltage detection circuit for detecting and outputting the three line voltages of the three-phase AC power supply;
a maximum voltage generation circuit for generating the maximum line voltage from the line voltages; and
a control circuit for commanding a voltage and frequency to the PWM control circuit such that the output is always equal to or less than the maximum line voltage.

According to the present invention, when the output of a three-phase AC power supply becomes unbalanced and normal operation at a desired frequency becomes impossible, the AC/AC direct power converter can continue operation by implementing PWM control of the maximum frequency that is possible as the three-phase output in that state.

According to an embodiment of the present invention, the maximum voltage generation circuit is made up by a rectifying circuit for rectifying line voltages and a multiplier for prescribed multiplication of the output of the rectifying circuit; and the control circuit is made up by: a voltage command unit for commanding a desired voltage, a first comparator for comparing the output voltage of the multiplier and the command of the voltage command unit and outputting the smaller of the two; a frequency command unit for commanding a desired frequency, a function generator for computing the maximum frequency that can be obtained as the three-phase output from the output of the multiplier; and a second comparator for comparing the frequency that is computed by the function generator and the command of the frequency command unit and outputting the smaller of the two.

Yet another AC/AC direct power converter of the present invention includes:
an input filter for shaping the output waveform of the three phases of the three-phase AC power supply;
a plurality of bidirectidnal switches that are connected to signals of three phases that have been wave-shaped by the input filter for effecting power conversion by means of ON/OFF operation;
a PWM control circuit for implementing ON/OFF control of the bidirectional switches based on a voltage command and a frequency command;
a commutation control circuit for controlling commutation of the bidirectional switches;
a voltage detection circuit for detecting and outputting the three line voltages of the three-phase AC power supply;
a maximum voltage generation circuit for generating the maximum line voltage from the line voltages; and
a control circuit for commanding a speed and a magnetic flux to the PWM control circuit such that the terminal voltage of a motor that is connected to output are always equal to or less than the maximum line voltage.

When the three-phase AC power supply becomes unbalanced and normal operation at a desired speed is not possible, the AC/AC direct power converter can continue operation by implementing PWM control to the maximum speed that the three-phase output can give to the motor in that state.

Further, when the torque that is produced by a desired magnetic flux cannot be given to the motor, the AC/AC direct power converter can continue operation by implementing PWM control to the maximum magnetic flux according to the maximum torque that the three-phase output can give to the motor in that state.

According to an embodiment of the present invention, the maximum voltage generation circuit may be constituted by a rectifying circuit for rectifying the line voltages and a multiplier for prescribed multiplication of the output of the rectifying circuit; and the control circuit may be constituted by: a speed command unit for commanding a desired speed, a first function generator for computing the maximum speed that can be obtained as the three-phase output from the output of the multiplier, a first comparator for comparing the maximum speed and the command of the speed command unit and outputting the smaller of the two, a magnetic flux command unit for commanding a desired magnetic flux, a second function generator for computing the maximum magnetic flux that the three-phase output can give to the motor from the output of the multiplier, and a second comparator for comparing the maximum magnetic flux and the command of the magnetic flux command unit and outputting the smaller of the two.

According to an embodiment of the present invention, the first function generator may command a predetermined minimum speed when the maximum line voltage falls below a prescribed value, and the second function generator may command a predetermined minimum magnetic flux when the maximum line voltage falls below a prescribed value.

According to the present invention, when the three-phase AC power supply falls below a prescribed value for an instant, rotation of the motor can be continued by PWM control without halting the motor by means of momentum until the three-phase AC power supply recovers by implementing PWM control such that the motor rotates at a predetermined minimum speed and magnetic flux.

### Brief Description of the Drawings

Fig. 1 is a block diagram showing the composition of a PWM cycloconverter of the prior art.
Fig. 2 is a block diagram showing the composition of input power supply phase detection circuit 40 in the PWM cycloconverter of Fig. 1.
Fig. 3 is a block diagram showing the composition of a PWM inverter.
Fig. 4 is a block diagram showing the composition of an elevator system of the prior art that applies a PWM inverter in which the emergency power supply is a three-phase AC power supply.

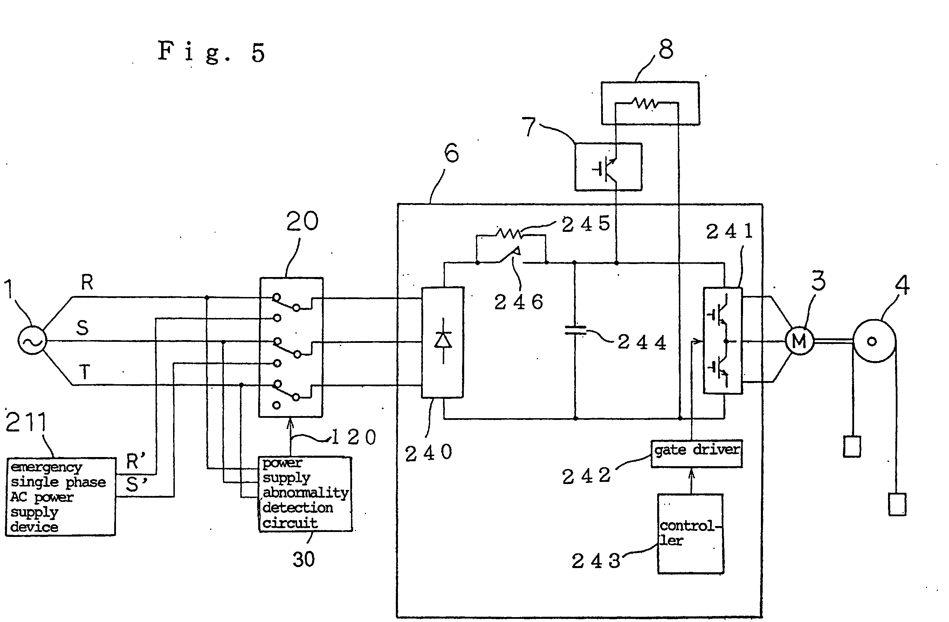

Fig. 5 is a block diagram showing the composition of an elevator system of the prior art that applies a PWM inverter in which the emergency power supply is a single-phase AC power supply.

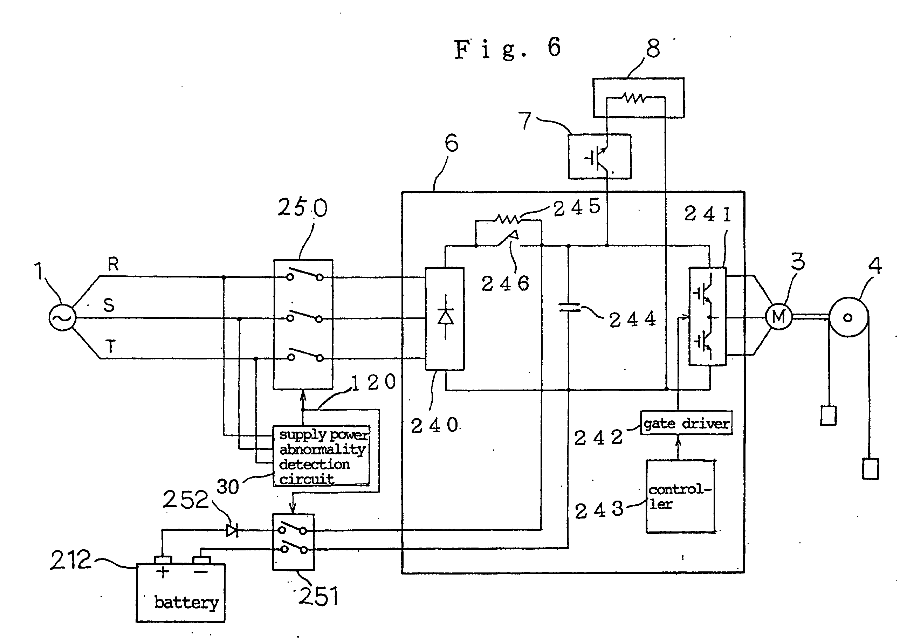

Fig. 6 is a block diagram showing the composition of an elevator system of the prior art that applies a PWM inverter in which the emergency power supply is a battery.
Fig. 7 is a block diagram showing the composition of an elevator system of the prior art that applies a PWM inverter in which the emergency power supply is a large-capacity capacitor.
Fig. 8 is a block diagram showing the composition of an elevator system that applies a PWM cycloconverter.

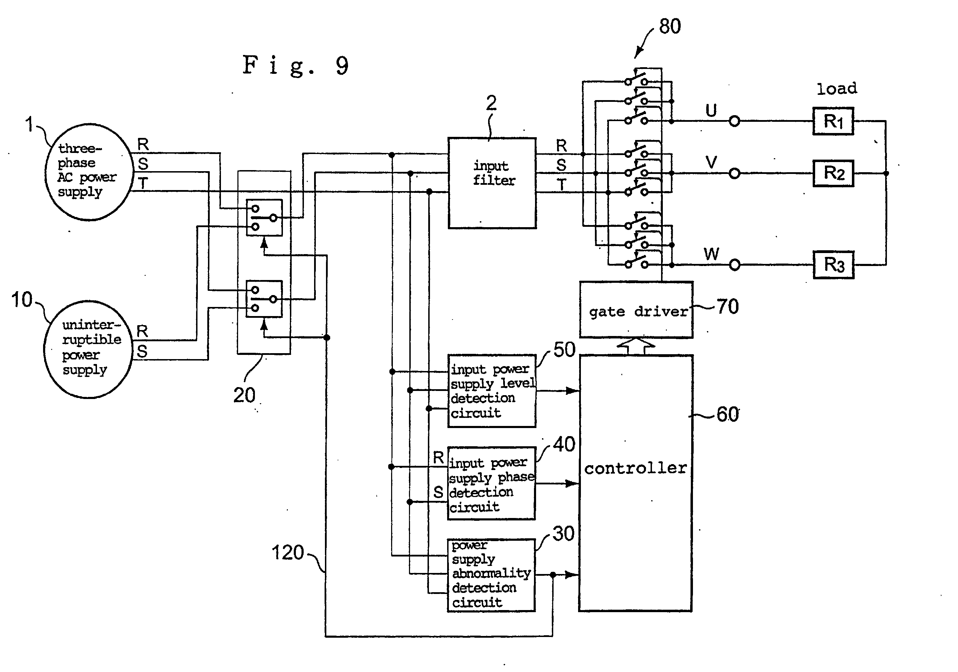

Fig. 9 is a block diagram showing the composition of the PWM cycloconverter of the first embodiment of the present invention.

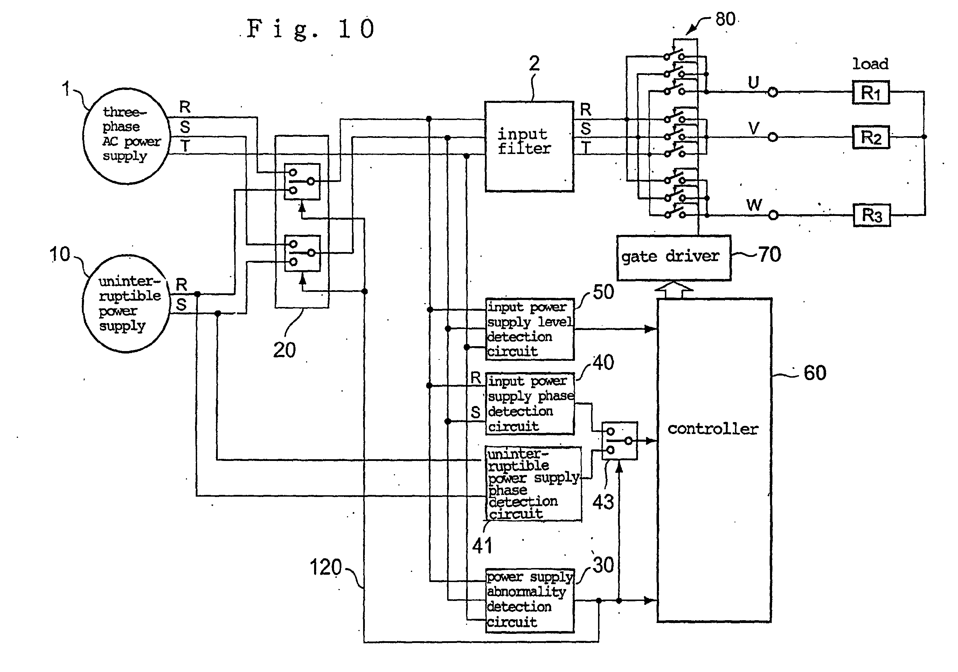

Fig. 10 is a block diagram showing the composition of the PWM cycloconverter of the second embodiment of the present invention.

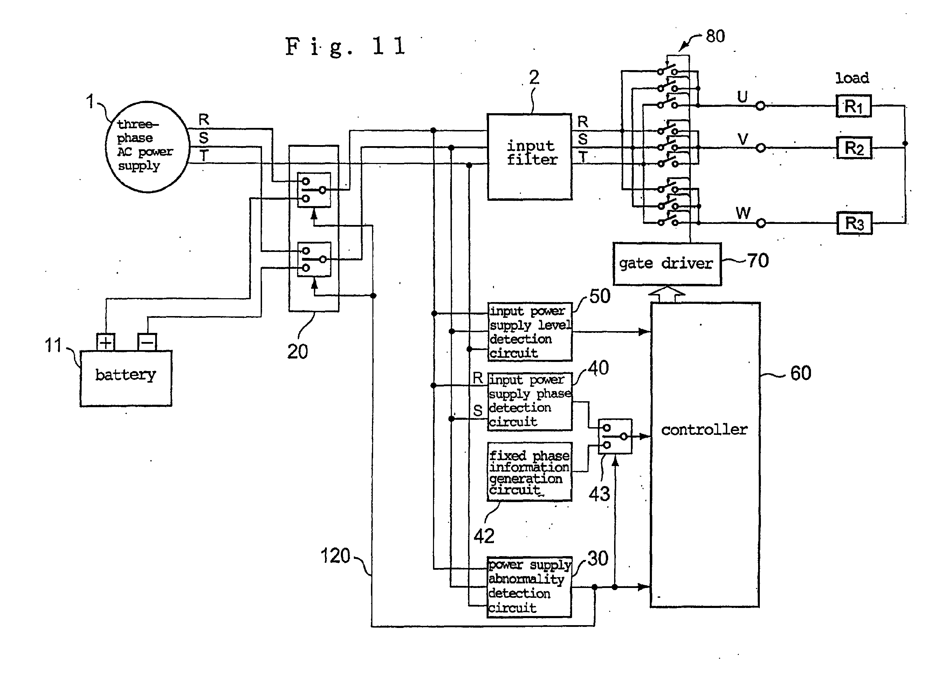

Fig. 11 is a block diagram showing the composition of the PWM cycloconverter of the third embodiment of the present invention.

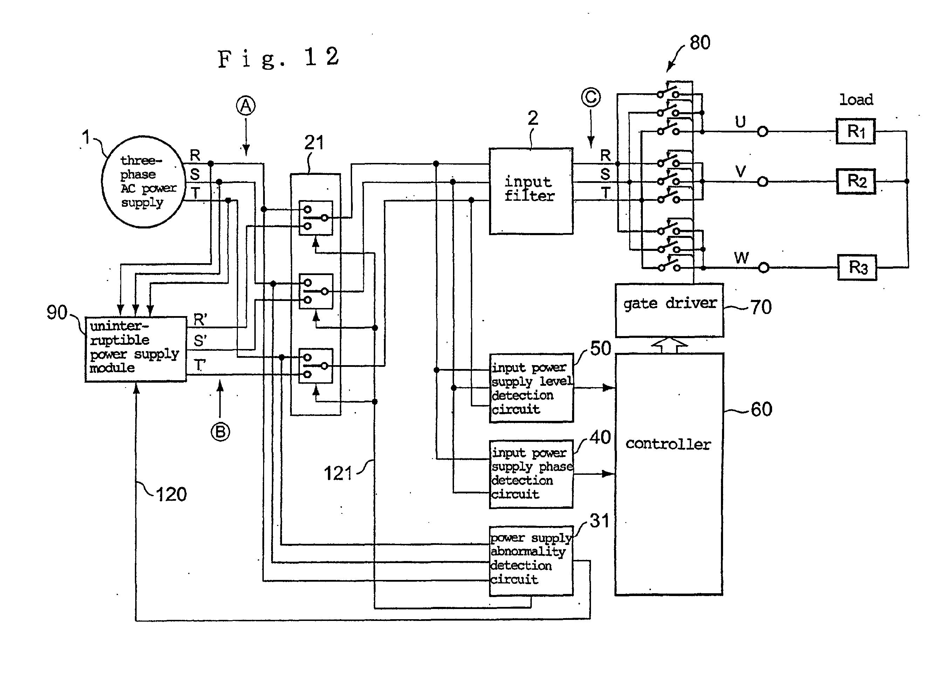

Fig. 12 is a block diagram showing the composition of the PWM cycloconverter of the fourth embodiment of the present invention.

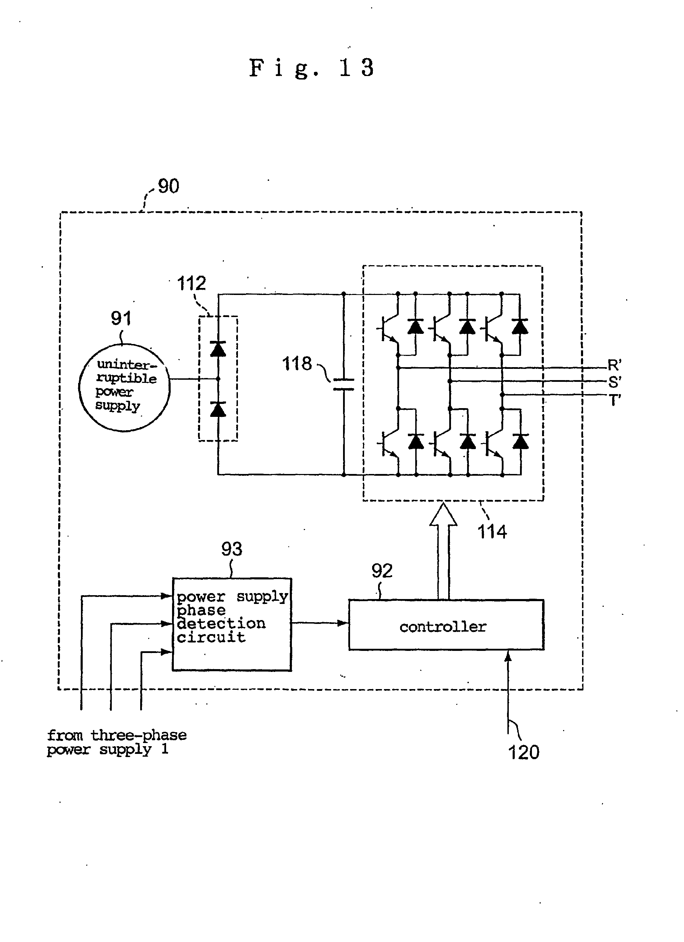

Fig. 13 is a block diagram showing the composition of uninterruptible power supply module 90 in the PWM cycloconverter of Fig. 12.

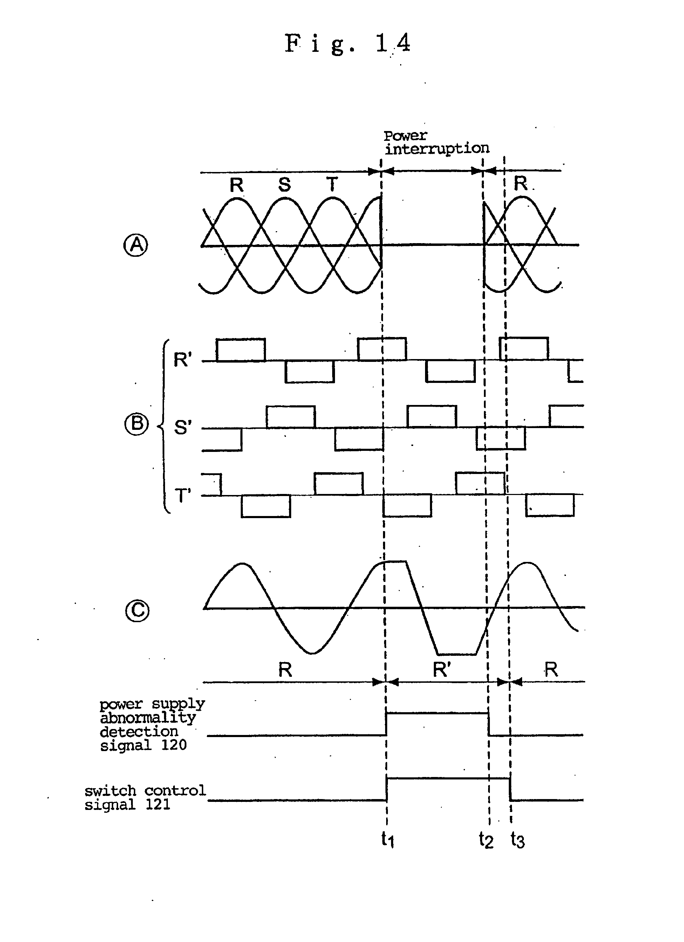

Fig. 14 is a timing chart showing the operation of the PWM cycloconverter of Fig. 12.

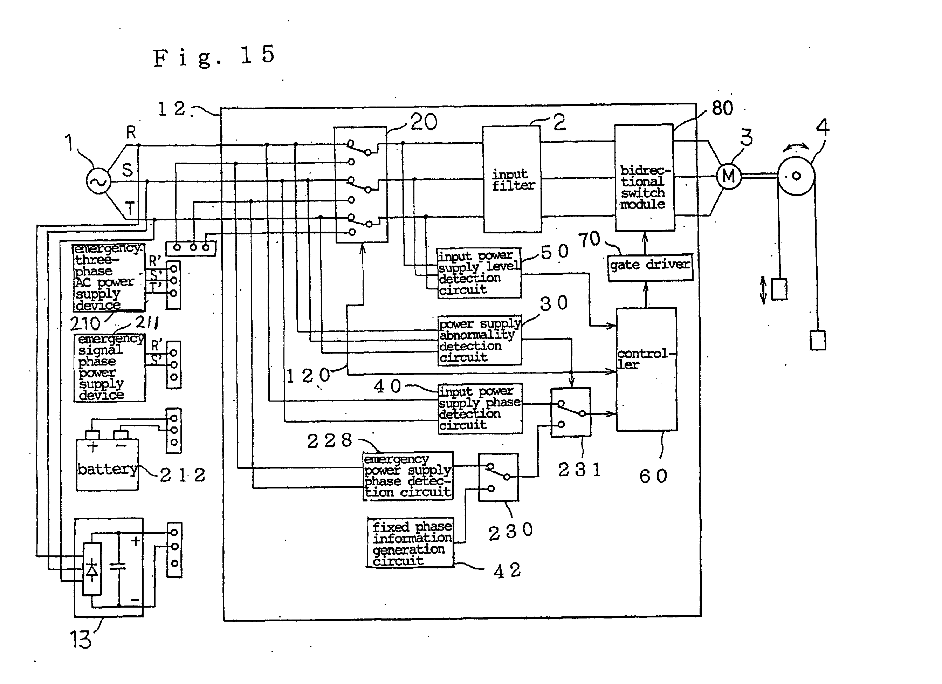

Fig. 15 is a block diagram showing the composition of the elevator system of the fifth embodiment of the present invention that applies a PWM cycloconverter.

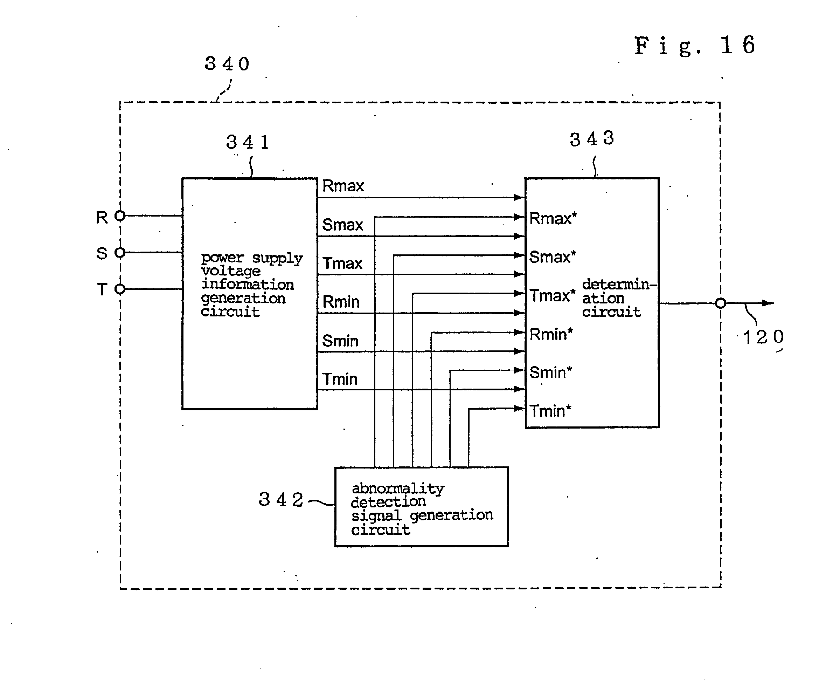

Fig. 16 is a block diagram showing the composition of power supply abnormality detection circuit 340 in the sixth embodiment of the present invention.

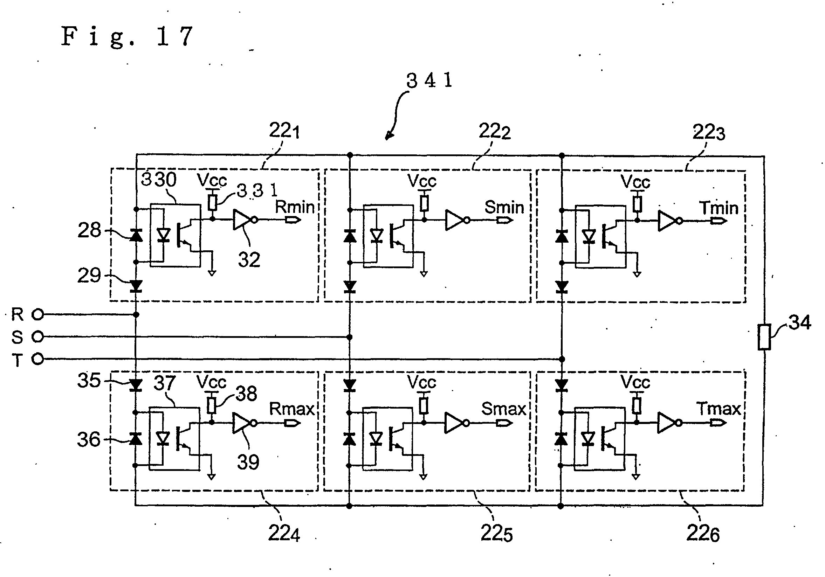

Fig. 17 is a circuit diagram showing the composition of power supply voltage information generation circuit 41 in Fig. 16.

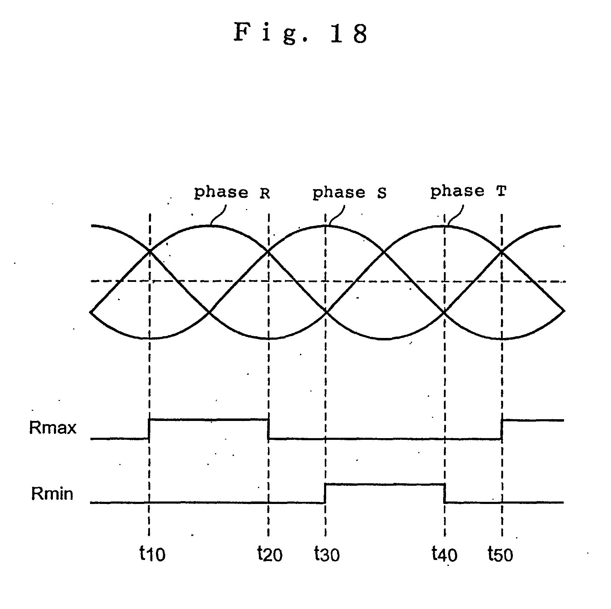

Fig. 18 is a timing chart for explaining the operation of power supply voltage information generation circuit 41.

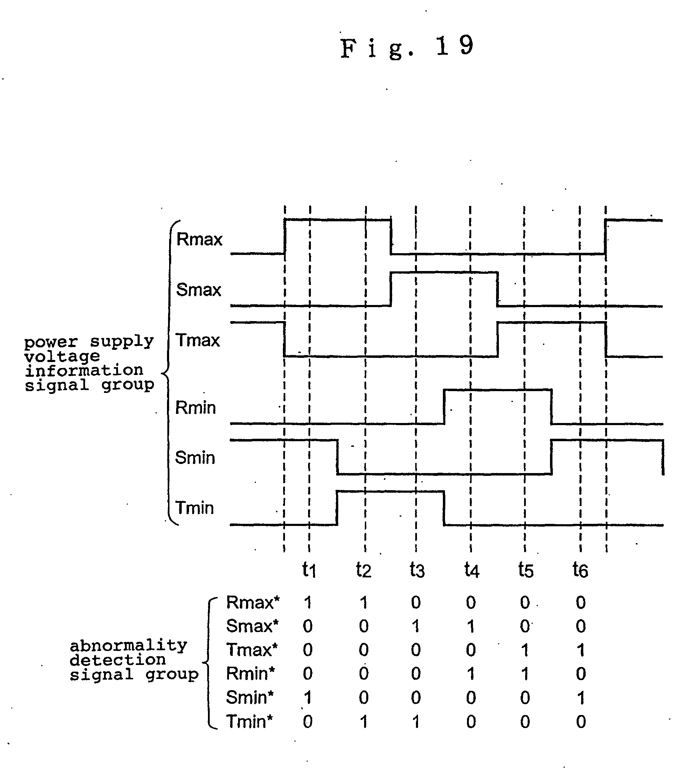

Fig. 19 is a timing chart showing the relation between power supply voltage information signal group Rmax·Tmin and abnormality detection signal group Rmax*·Tmin*.

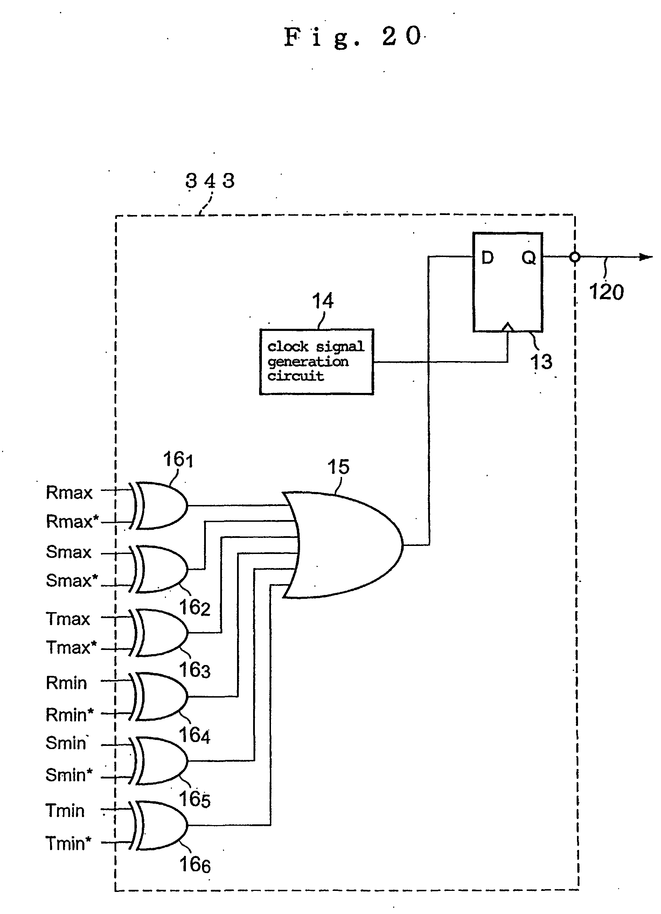

Fig. 20 is a circuit diagram showing the composition of the determination circuit in Fig. 16.

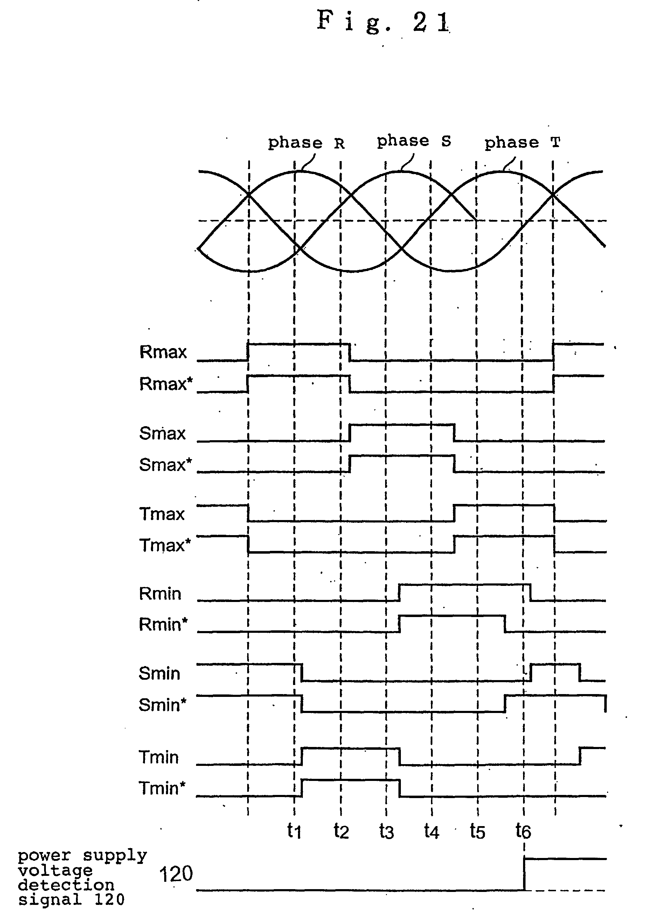

Fig. 21 is a timing chart showing the relation between power supply voltage information signal group Rmax·Tmin and abnormality detection signal group Rmax*·Tmin* when a power supply abnormality has occurred.

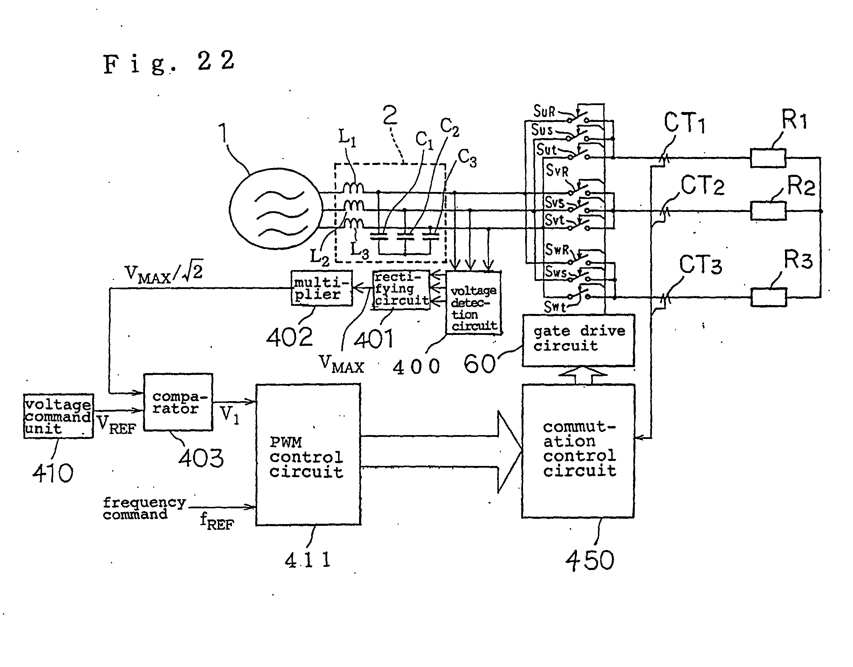

Fig. 22 is a block diagram showing the composition of the PWM cycloconverter of the seventh embodiment of the present invention.

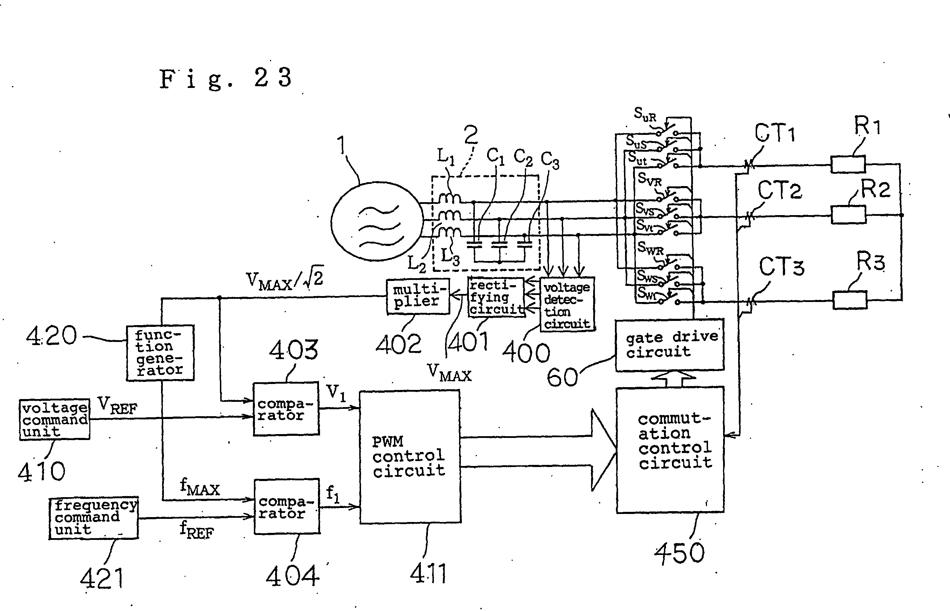

Fig. 23 is a block diagram showing the composition of the PWM cycloconverter of the eighth embodiment of the present invention.

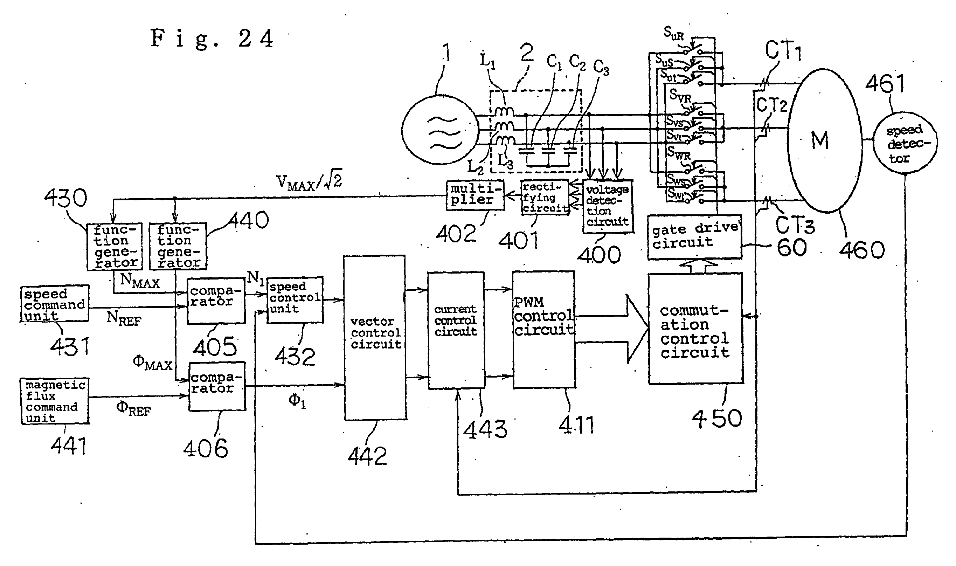

Fig. 24 is a block diagram showing the composition of the PWM cycloconverter of the ninth embodiment of the present invention.

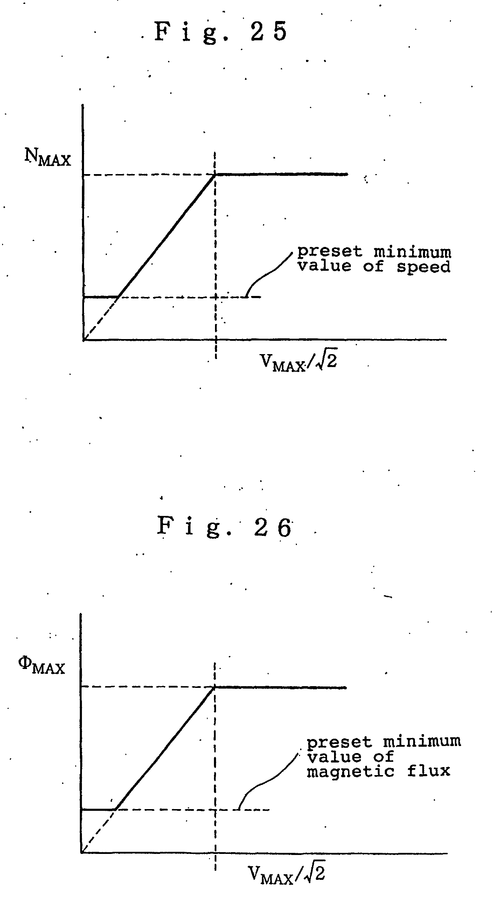

Fig. 25 is a graph showing an example of the function of function generator 430.
Fig. 26 is a graph showing an example of the function of function generator 440.

### Best Mode for Carrying Out the Invention

Embodiments of the present invention are next described in detail with reference to the accompanying Figures.

### (First Embodiment)

We first refer to Fig. 9, which is a block diagram showing the composition of the PWM cycloconverter of the first embodiment of the present invention. In Fig. 9, constituent elements that are identical to constituent elements in Fig. 1 are given the same reference numbers, and redundant explanation of these elements is here omitted.

With respect to the prior-art PWM cycloconverter shown in Figure, the PWM cycloconverter of this embodiment is additionally provided with power supply switch 20 and uninterruptible power supply 10, which is a single-phase AC power supply, and controller 160 is replaced by controller 60.

When power supply abnormality detection signal 120 is not received as input, power supply switch 20 outputs output voltages of three phases (R, S, T) from three-phase AC power supply 1 to input filter 2 without alteration, and when power supply abnormality detection signal 120 is received, power supply switch 20 outputs single-phase AC voltage from uninterruptible power supply 10 to input filter 2 in place of the R and S phases of the output voltages of three phases (R, S, T) from three-phase AC power supply 1.

In a normal state in which power supply abnormality detection signal 120 is not received as input, controller 60 performs the same operation as controller 160, outputting gate signals to gate driver 70 for controlling the operation of bidirectional switch module 80. Then, when power supply abnormality detection signal 120 is received as input, controller 60 switches the control mode from three-phase input operation to single-phase input operation.

In this embodiment, moreover, input power supply phase detection circuit 40 detects the phase, taking as input the R and S phases of the output voltages of three phases that are applied from power supply switch 20 as input to input filter 2.

The operation of the PWM cycloconverter of this embodiment is next explained with reference to Fig. 9.

When an abnormality occurs in three-phase AC power supply 1 in the PWM cycloconverter of this embodiment, the abnormality of the three-phase AC power supply 1 is detected by power supply abnormality detection circuit 30 and power supply abnormality detection signal 120 is output. The output of power supply abnormality detection signal 120 causes power supply switch 20 to output the single-phase AC output voltage from uninterruptible power supply 10 to input filter 2 in place of the R and S phases of the output voltages of three phases (R, S, T) from three-phase AC power supply 1.

As a result, input power supply phase detection circuit 40 detects the phase of uninterruptible power supply 10. The input of power supply abnormality detection signal 120 causes controller 60 to then switch the control mode from three-phase input operation to single-phase input operation and to use the phase information of uninterruptible power supply 10 that has been detected by input power supply phase detection circuit 40 to control bidirectional switch module 80 by way of gate driver 70.

According to the PWM cycloconverter of this embodiment, when an abnormality occurs in three-phase AC power supply 1, the power supply that is used is switched from three-phase AC power supply 1 to single-phase uninterruptible power supply 10 and the control mode is switched from three-phase operation to single-phase operation, whereby the power supply is switched without substantially interrupting operation and continuous operation can be realized.

### (Second Embodiment )

Next, regarding the PWM cycloconverter of the second embodiment of the present invention, in the PWM cycloconverter of the first embodiment that was described in the foregoing explanation, when power supply abnormality detection signal 120 is output and the power supply that is applied as input to input power supply phase detection circuit 40 is switched from three-phase AC power supply 1 to uninterruptible power supply 10, a certain amount of time is required for the PLL that constitutes input power supply phase detection circuit 40 to lock, the phase of uninterruptible power supply 10 to be detected, and phase information to be output. Consistent with the nature of a typical PLL circuit, this time interval lengthens if the follow-up range of the frequency fluctuation of the input signal is set wider. Thus, when switching to uninterruptible power supply 10, i.e., the emergency power supply, there is a possibility that operation will be interrupted instantaneously in the PWM cycloconverter of the above-described first embodiment.

The PWM cycloconverter of the present embodiment is a device directed toward remedying this point such that the power supplies can be switched without interrupting operation when a power supply abnormality occurs and continuous operation can be realized.

We refer to Fig. 10, which is a block diagram showing the composition of the PWM cycloconverter of this embodiment. In Fig. 10, constituent elements that are identical to constituent elements in Fig. 9 bear the same reference numerals, and redundant explanation of such elements is omitted. In the PWM cycloconverter of the present embodiment, the PWM cycloconverter of the first embodiment that is shown in Fig. 9 is additionally provided with uninterruptible power supply phase detection circuit 41 for detecting the phase of uninterruptible power supply 10 and phase detection circuit switch 43.

Uninterruptible power supply phase detection circuit 41 has the same composition as input power supply phase detection circuit 40 that is shown in Fig. 2. Uninterruptible power supply phase detection circuit 41 constantly detects the phase of uninterruptible power supply 10.

Phase detection circuit switch 43 selects and outputs the phase information that is output from uninterruptible power supply phase detection circuit 41 when power supply abnormality detection signal 120 is received as input, and selects and outputs phase information that is output from input power supply phase detection circuit 40 when power supply abnormality detection signal 120 is not received.

The operation of the PWM cycloconverter of the present embodiment is next described with reference to Fig. 10.

When an abnormality occurs in three-phase AC power supply 1 in the PWM cycloconverter of the present embodiment and power supply abnormality detection signal 120 is output from power supply abnormality detection circuit 30, the following operations are performed in addition to the operations in the PWM cycloconverter of the above-described first embodiment.

Phase detection circuit switch 43 switches the phase information that is to be output from phase information that is output from input power supply phase detection circuit 40 to phase information that is output from uninterruptible power supply phase detection circuit 41. In uninterruptible power supply phase detection circuit 41, the phase of uninterruptible power supply 10 is detected from before the occurrence of a power supply abnormality, and accurate phase information of uninterruptible power supply 10 can therefore be output even immediately after phase detection circuit switch 43 switches the phase information that is output.

Accordingly, compared to the above-described PWM cycloconverter of the first embodiment, the PWM cycloconverter of the present embodiment can substantially eliminate any halt in operation when switching the power supply and can realize continuous operation.

### (Third Embodiment )

Next, regarding the PWM cycloconverter of the third embodiment of the present invention, we refer to Fig. 11, which is a block diagram showing the composition of the PWM cycloconverter of this embodiment. In Fig. 11, constituent elements that are identical to constituent elements in Fig. 10 bear the same reference numerals, and redundant explanation of these elements is here omitted.

Compared to the PWM cycloconverter of the second embodiment that is shown in Fig. 11, the PWM cycloconverter of the present embodiment is provided with battery 11 in place of uninterruptible power supply 10, and is provided with fixed phase information generation circuit 42 in place of uninterruptible power supply phase detection circuit 41. Fixed phase information generation circuit 42 generates and outputs fixed phase information.

The operation of the PWM cycloconverter of the present embodiment is next described with reference to Fig. 11.

Power supply switch 20 and phase detection circuit switch 43 in the present embodiment perform operation that is identical to that of the second embodiment shown in Fig. 10. When an abnormality occurs in three-phase AC power supply 1 and power supply abnormality detection signal 120 is output from power supply abnormality detection circuit 30, phase detection circuit switch 43 selects fixed phase information that is generated by fixed phase information generation circuit 42 and outputs the information to controller 60.

Battery 11 is a DC power supply and its phase is therefore always fixed. Thus, if controller 60 in the present embodiment uses the fixed phase information that is generated by fixed phase information generation circuit 42 to perform single-phase operation, continuous operation can be realized without any halt in operation when the power supplies are switched.

### (Fourth Embodiment)

Next, regarding the PWM cycloconverter of the fourth embodiment of the present invention, we refer to Fig. 12, which is a block diagram showing the composition of the PWM cycloconverter of the present embodiment. In Fig. 12, constituent elements that are identical to constituent elements in Fig. 9 bear the same reference numerals, and redundant explanation of these elements is here omitted.

In the PWM cycloconverter of the present embodiment, in contrast with the PWM cycloconverter of the first embodiment that is shown in Fig. 9, uninterruptible power supply 10 is replaced by uninterruptible power supply module 90, power supply switch 20 is replaced by power supply switch 21, and power supply abnormality detection circuit 30 is replaced by power supply abnormality detection circuit 31.

Power supply abnormality detection circuit 31 outputs power supply abnormality detection signal 120 and switch control signal 121 when a power supply abnormality such as open phase, power failure, or imbalance is detected in three-phase AC power supply 1, and when the power supply abnormality is restored to normality, power supply abnormality detection circuit 31 halts the output of power supply abnormality detection signal 120, and after the subsequent passage of a fixed time interval, halts the output of switch control signal 121.

By constantly detecting the phase of three-phase AC power supply 1, uninterruptible power supply module 90 generates voltages of three phases that are synchronized with the output voltages of three-phase AC power supply 1, and upon receiving power supply abnormality detection signal 120, outputs voltages of three phases at a fixed cycle based on the phase information immediately preceding input of power supply abnormality detection signal 120.

Power supply switch 21 outputs the output voltages of three phases (R, S, T) of three-phase AC power supply 1 to input filter 2 when switch control signal 121 is not received as input, and when switch control signal 121 is received, outputs the AC output voltages of three phases (R', S', T') from uninterruptible power supply 10 to input filter 2.

Power supply abnormality detection signal 120 is not applied as input to controller 60 in this embodiment, and normal three-phase operation is performed even when a power supply abnormality occurs.

Fig. 13 is a block diagram for explaining the composition of uninterruptible power supply module 90. In Fig. 13, constituent elements that are identical to constituent elements in Fig. 3 bear the same reference numerals, and redundant explanation of these elements is here omitted.

Uninterruptible power supply module 90 is made up by: uninterruptible power supply (UPS) 91, diode module 112, capacitor 118, transistor module 114, controller 92, and power supply phase detection circuit 93.

Power supply phase detection circuit 93 constantly detects the phase of three-phase AC power supply 1 by receiving as input the output voltages of three phases of three-phase AC power supply 1 and outputs the detected phases as phase information to controller 92.

In a normal state in which power supply abnormality detection signal 120 is not received as input, controller 92 controls each of the transistors of transistor module 114 based on the phase information of three-phase AC power supply 1 that has been detected by power supply phase detection circuit 93 and implements control such that the phases of the output voltages of three phases that are output from transistor module 114 are synchronized to three-phase AC power supply 1. When power supply abnormality detection signal 120 is received as input, controller 92 then controls each of the transistors of transistor module 114 based on phase information that immediately precedes the input of power supply abnormality detection signal 120 to implement control such that the output voltages of three phases that are output from transistor module 114 have a fixed cycle.

The operation of the PWM cycloconverter of the present embodiment is next explained in detail with reference to Figs. 12, 13, and 14. Fig. 14 is a timing chart for explaining the operation of the PWM cycloconverter of the present embodiment. This Fig. 14 shows the change in the waveform of the output voltages of three-phase AC power supply 1, the waveform of the output voltages of uninterruptible power supply 90, the waveform of the phase R of the input voltages of bidirectional switch module 80, and switch control signal 121 and power supply abnormality detection signal 120.

In this Fig. 14, a case is shown in which a power supply abnormality that results in a power interruption in three-phase AC power supply 1 occurs at time t₁, and three-phase AC power supply 1 recovers from the power interruption at time t₂.

Until time t₁, the output voltages of three-phase AC power supply 1 are applied as input to bidirectional switch module 80 without modification. During this time, output voltages (R', S', T') that are synchronized to the output voltages of three-phase AC power supply 1 are generated at uninterruptible power supply module 90.

Then, when a power interruption occurs in three-phase AC power supply 1 at time t₁, power supply abnormality detection circuit 31 detects the abnormality and outputs power supply abnormality detection signal 120 and switch control signal 121. Power supply switch 21 therefore selects the output voltages of uninterruptible power supply module 90 and outputs these voltages. When power supply abnormality detection signal 120 is received as input, operation is performed at uninterruptible power supply module 90 such that the output voltages that were being output immediately before reception of power supply abnormality detection signal 120 are output without alteration at a fixed cycle. As a result, the voltages that are applied as input to bidirectional switch module 80 after time t₁ have substantially the same voltage waveform as for a case in which a power supply abnormality did not occur.

Then, when three-phase AC power supply 1 recovers from the power interruption at time t₂, power supply abnormality detection circuit 31 first halts output of power supply abnormality detection signal 120. As a result, control is implemented at uninterruptible power supply module 90 such that the output voltages of transistor module 114 are synchronized with the output voltages of AC power supply 1. Then, at time t₃ following the passage of a fixed time interval from time t₂, power supply abnormality detection circuit 31 halts the output of switch control signal 121, whereby power supply switch 21 selects and outputs the output voltages of three-phase AC power supply 1 to input filter 2.

Upon recovery of the power supply abnormality, power supply abnormality detection circuit 31 halts the output of switch control signal 121 after the passage of a fixed time interval after halting the output of power supply abnormality detection signal 120 in order to secure time for synchronizing the phases of the output voltages of uninterruptible power supply module 90 and the output voltages of three-phase AC power supply 1.

As described in the foregoing explanation, according to the PWM cycloconverter of the present embodiment, the constant generation by uninterruptible power supply module 90 of AC voltages of three phases that are synchronized to three-phase AC power supply 1 enables three-phase AC operation to be continued without interruption when an abnormality occurs in three-phase AC power supply 1.

### (Fifth Embodiment)

Next, regarding an elevator system that employs the PWM cycloconverter of the fifth embodiment of the present invention, we refer to Fig. 15, which is a block diagram showing the composition of the elevator system of this embodiment. In Fig. 15, constituent elements that are identical to constituent elements in Fig. 8 bear the same reference numerals, and redundant explanation of these elements is here omitted.

Compared to elevator driver 5 shown in Fig. 8, elevator driver 12 of the present embodiment is further provided with power supply switch 20, emergency power supply phase detection circuit 228, fixed phase information generation circuit 42, phase detection circuit switch setting unit 230, and phase detection circuit switch 231, and, in place of controller 160, is equipped with controller 60 for which the software content has been modified.

In the elevator system of the present embodiment, one power supply that is selected from among emergency three-phase AC power supply device 210, emergency single-phase AC power supply device 211, battery 212, and large-capacity capacitor 13 is selected in advance as the emergency power supply.

Power supply switch 20 outputs the output voltages of three phases (R, S, T) from three-phase AC power supply 1 to input filter 2 without alteration when power supply abnormality detection signal 120 is not received as input, and when power supply abnormality detection signal 120 is received, outputs voltage from the power supply that has been set as the emergency power supply to input filter 2.

Emergency power supply phase detection circuit 228 receives as input two of the phases (R and S) of the output voltages of three phases when the emergency power supply is emergency three-phase AC power supply device 210 and detects the phase detects the phase of the single-phase voltage (R' and S') when the emergency power supply is emergency single-phase AC power supply device 211; and outputs the detected phase information to phase detection circuit switch setting unit 230.

Fixed phase information generation circuit 42 generates and outputs fixed phase information. Phase detection circuit switch setting unit 230 selects either the phase information from emergency power supply phase detection circuit 228 or the fixed phase information from fixed phase information generation circuit 42 in accordance with settings made in advance and outputs the information to phase detection circuit switch 231.

When battery 212 or large-capacity capacitor 13 has been selected as the emergency power supply, phase detection circuit switch setting unit 230 is set such that the fixed phase information from fixed phase information generation circuit 42 is selected and output. On the other hand, when emergency three-phase AC power supply device 210 or emergency single-phase AC power supply device 211 has been selected as the emergency power supply, phase detection circuit switch setting unit 230 is set such that the phase information from emergency power supply phase detection circuit 228 is selected and output.

Phase detection circuit switch 231 selects the phase information from input power supply phase detection circuit 40 and sends the phase information to controller 60 when power supply abnormality detection signal 120 is not received as input, and selects the phase information of the emergency power supply that is the output from phase detection circuit switch setting unit 230 and sends the phase information to controller 60 when power supply abnormality detection signal 120 is received as input.

Controller 60 controls bidirectional switch module 80 based on the phase information that has been output from phase detection circuit switch 231, effecting three-phase input operation of bidirectional switch module 80 when power supply abnormality detection signal 120 is not received as input, and, when power supply abnormality detection signal 120 is received as input, switching the control mode of bidirectional switch module 80 from three-phase input operation to the operation of the control mode that accords with the phase information that is output from phase detection circuit switch 231.

More specifically, controller 60 sets the control mode of bidirectional switch module 80 to three-phase input operation when the phase information that is output from phase detection circuit switch 231 is phase information of a three-phase AC power supply sets the control mode of bidirectional switch module 80 to single-phase input operation when the phase information that is output from phase detection circuit switch 231 is phase information of a single-phase AC power supply and sets the control mode of bidirectional switch module 80 to single-phase input operation when the phase information that is output from phase detection circuit switch 231 is fixed phase information.

The operation of elevator driver 12 of the present embodiment is next explained in detail with reference to Fig. 15.

Explanation first regards operation when a power supply abnormality has not occurred. When a power supply abnormality has not occurred, power supply abnormality detection signal 120 is not output from power supply abnormality detection circuit 30, and as a result, the output voltages of three phases (R, S, T) from three-phase AC power supply 1 are output by power supply switch 20 to input filter 2 without alteration, and the phase information from input power supply phase detection circuit 40 is selected at phase detection circuit switch 231 and output to controller 60. In this way, controller 60 implements control for three-phase input operation based on phase information that is output from input power supply phase detection circuit 40.

Explanation next regards operation when a power supply abnormality occurs. When a power supply abnormality occurs, power supply abnormality detection signal 120 is output from power supply abnormality detection circuit 30, whereby, at power supply switch 20, the output voltage of the power supply that has been set as the emergency power supply is output to input filter 2, and at phase detection circuit switch 231, the phase information from phase detection circuit switch setting unit 230 is selected and output to controller 60. Based on the received phase information, controller 60 then implements control for operation that accords with the form of the emergency power supply that has been set.

The operation of motor 3 is thus possible at the time of a power supply abnormality regardless of which of emergency three-phase AC power supply device 210, emergency single-phase AC power supply device 211, or a DC power supply such as battery 212 or large-capacity capacitor 13 has been set as the emergency power supply.

In other words, when equipment such as a three-phase or single-phase AC power supply or a DC power supply such as a battery has already been established as the safety power supply, the elevator driver of the present embodiment enables emergency operation by using the already established safety power supply without necessitating provision of a new emergency power supply.

In the elevator system of the present embodiment, although explanation has been presented for a case in which power supply switch 20 is provided in elevator driver 12, the present invention is not limited to this form, and the present invention can be similarly applied even when power supply switch 20 is provided outside elevator driver 12. In such a case, power supply abnormality detection signal 120, the voltages of three phases (R, S, T) of three-phase AC power supply 1, and the voltages of two phases (R' and S') of the emergency power supply are separately applied to elevator driver 12.

Further, although a case has been described in the present embodiment in which four emergency power supply devices 210, 211, 212, and 13 are provided, the present invention can obviously be applied as long as at least one emergency power supply is provided.

Finally, when the emergency power supply is only a DC power supply such as battery 212 or large-capacity capacitor 13, emergency power supply phase detection circuit 228 and phase detection circuit switch setting unit 230 may be eliminated and the fixed phase information that is output from fixed phase information generation circuit 42 may be applied as input to phase detection circuit switch 231. Similarly, when the emergency power supply is only emergency three-phase AC power supply device 210 or emergency single-phase AC power supply device 211, fixed phase information generation circuit 42 and phase detection circuit switch setting unit 230 may be eliminated, and the phase information that is output from emergency power supply phase detection circuit 228 may be applied as input to phase detection circuit switch 231.

### (Sixth Embodiment)

We next refer to Fig. 16 regarding the power supply abnormality detection circuit that is used in the PWM cycloconverter of the sixth embodiment of the present invention.

The PWM cycloconverter of the present embodiment is provided with power supply abnormality detection circuit 340 that is shown in Fig. 16 in place of power supply abnormality detection circuit 30 that was provided in the above-described first to fifth embodiments.

As shown in Fig. 16, power supply abnormality detection circuit 340 of the present embodiment is made up by power supply voltage information generation circuit 341, abnormality detection signal generation circuit 342, and determination circuit 343.

Power supply voltage information generation circuit 341 detects information corresponding to the size relation of the voltages of each of the phases R, S, and T of three-phase AC power supply 1, and outputs this information as power supply voltage information signals Rmax·Tmin. Abnormality detection signal generation circuit 342 saves in advance information that is based on the size relations of the voltages of each of phases R, S, T when three-phase AC power supply 1 is normal in, for example, a table synchronizes this information with the output voltages of three-phase AC power supply 1; and outputs the synchronized information as abnormality detection signals Rmax*·Tmin*. Determination circuit 343 compares power supply voltage information signals Rmax·Tmin and abnormality detection signals Rmax*·Tmin* at fixed intervals and outputs power supply voltage abnormality signal 120 when these signals differ.

Referring now to Fig. 17, a specific example of the circuit configuration of power supply voltage information generation circuit 341 is next described. Power supply voltage information generation circuit 341 is made up by six current detection circuits 221-226 and resistor 34. Because current detection circuits 221·226 all have identical construction, only current detection circuits 221 and 224 will be described as representative.

Current detection circuit 221 is constituted by diodes 28 and 29, photocoupler 330, resistor 331, and inverter 32.

When the voltage of the phase R is higher than either of the voltages of the phases S and T, current detection circuit 221 does not operate and photocoupler 330 therefore turns OFF The input of inverter 32 is connected to DC power supply Vcc by resistor 331 and therefore becomes high level (hereinbelow abbreviated "H"), whereby the output Rmin of inverter 32 becomes low level (hereinbelow abbreviated "L").

When the voltage of the phase R is lower than both the voltages of the phases S and T, current detection circuit 221 operates, whereby the difference in potential between the voltage by way of resistor 34 and the voltage of the phase R causes diode 29 and photocoupler 330 to turn ON. The output of photocoupler 330 thereupon becomes L and the output Rmin of inverter 32 becomes H.

Current detection circuit 224 is constituted by diodes 35 and 36, photocoupler 37, resistor 38, and inverter 39.

When the voltage of the phase R is lower than either of the voltages of the phases S and T, current detection circuit 224 does not operate and photocoupler 37 therefore turns OFF. The input of inverter 39, being connected to DC power supply Vcc by resistor 38, then becomes H, whereby the output Rmax of inverter 39 becomes L.

When the voltage of the phase R is higher than both of the voltages of the phases S and T, current detection circuit 224 operates and the potential difference between the voltage by way of resistor 34 and the voltage of the phase R causes diode 35 and photocoupler 37 to turn ON. The output of photocoupler 37 thereupon becomes L and the output Rmax of inverter 39 becomes H.

Essentially, when the voltage of the phase R is higher than both of the voltages of the phases S and T, current detection circuit 224 operates and Rmax becomes H; and when the voltage of the phase R is lower than both of the voltages of the phases S and T, current detection circuit 221 operates and Rmin becomes H.

We next refer to Fig. 18, which shows the relation between the phase R voltage and power supply voltage information signals Rmax and Rmin, to more specifically present this operation of current detection circuits 221 and 224. In Fig. 18, Rmax is H during the time interval from time t₁₀ to time t₂₀ because the phase R voltage is higher than the voltages of the phases S and phases T. Rmin then becomes H during the time interval from time t₃₀ to time t₄₀ because the phase R voltage is lower than the phases S and phases T voltages. At time t₅₀, the phase R voltage again becomes the highest voltage and Rmax therefore becomes H.

The same operation is carried out for the phases S and phases T, whereby at any particular time, only one of current detection circuits 221·223 and one of current detection circuits 224·226 is in an operating state, and only one signal of power supply voltage information generation signals Rmin·Tmin and one signal of power supply voltage information generation signals Rmax·Tmax is H.

We next refer to Fig. 19 to describe the details of the operation of abnormality detection signal generation circuit 342. Fig. 19 is a timing chart showing the relation of power supply voltage information signal group Rmin·Tmin that is obtained by power supply voltage information generation circuit 341 and abnormality detection signal group Rmin*·Tmin* that is generated by abnormality detection signal generation circuit 342.

In abnormality detection signal generation circuit 342, information that corresponds to power supply voltage information signal group Rmax·Tmin when three-phase AC power supply 1 is normal is stored for each of times t1·t6, as shown in Fig. 19. Fig. 19 shows power supply voltage information signals group Rmax·Tmin when three-phase AC power supply 1 is normal, and the signal pattern of power supply voltage information signal group Rmax·Tmin therefore coincides with the signal pattern of abnormality detection signal group Rmax* ·Tmin* that is stored in abnormality detection signal generation circuit 342.

Fig. 20 shows a specific example of the circuit structure of determination circuit 343. In Fig. 20, determination circuit 343 is made up by: D-flip-flop circuit 13; a clock signal generation circuit 14 that is constituted by, for example, a counter; OR circuit 15, and six exclusive-OR circuits 161·166.

The six exclusive-OR circuits 161·166 each carry out the exclusive OR calculation between abnormality detection signal group Rmax*·Tmin* and power supply voltage information signal group Rmax·Tmin and output the calculation results. OR circuit 15 performs an OR calculation between each of the outputs of the six exclusive OR circuits 161·166 and outputs the calculation results. In other words, OR circuit 15 outputs H when even one of the outputs of the six exclusive OR circuits 161·166 is H. D-flip-flop circuit 13 holds the output value of OR circuit 15 that is received as input at the timing of the change in the clock signal that is generated by clock signal generation circuit 14 and outputs the output value as power supply voltage abnormality detection signal 120.

By means of the above-described construction, determination circuit 343 that is shown in Fig. 20 outputs power supply voltage abnormality signal 120 when a difference occurs in even one set of the power supply voltage information signals Rmax•Tmin and abnormality detection signals Rmax*·Tmin*.

The operation of power supply abnormality detection circuit 340 of the present embodiment when detecting an abnormality of the power-supply voltage is next described with reference to Fig. 21.

In Fig. 21, a case is shown in which the phases S is open at time t₅. During the interval from time t₁ to time t₅, no abnormality occurs in three-phase AC power supply 1 and power supply voltage information signals Rmax·Tmin and abnormality detection signal Rmax*·Tmin* therefore all match and power supply voltage abnormality signal 120 is unchanged at L. Then, at time t₅, a power supply voltage abnormality occurs in which the phases S is open-circuited, and the Rmin and Smin signals of power supply voltage information signal group Rmax·Tmin thereby differ from abnormality detection signals Rmin* and Smin*, respectively. Power supply voltage abnormality signal 120 therefore becomes H at time t₆, and the power supply voltage abnormality in which the phases S is open-circuited is thus detected.

In Fig. 21, a case was described in which only one phase of the three phases is open, but in a case in which a power supply abnormality occurs in which the phase sequence is reversed, the signal pattern of power supply voltage information signal group Rmax·Tmin that is generated by power supply voltage information generation circuit 341 will differ from the signal pattern of a normal state. Further, in power supply abnormality detection circuit 340 of the present embodiment, the comparison of power supply voltage information signal group Rmax·Tmin and abnormality detection signal group Rmax*·Tmin* was carried out constantly at fixed time intervals, and as a result, power supply abnormality for cases of reversed phase sequence can be detected similar to cases of open phase.

Thus, power supply abnormality detection circuit 340 of the present embodiment is capable of detecting power supply abnormalities both for power-supply voltage states in which only one phase is open-circuited and for states in which the phase sequence is reversed.

Finally, although the power supply abnormality detection circuit of the present embodiment was described using a case in which power supply abnormality detection circuit 340 was provided in a PWM cycloconverter, the present invention is not limited to this form and may also be similarly applied in a device that uses a three-phase AC power supply.

### (Seventh Embodiment)

Explanation next regards a power supply abnormality detection circuit used in a PWM cycloconverter of the seventh embodiment of the present invention. The PWM cycloconverter of the present embodiment is for enabling normal operation and continued drive of, for example, a motor despite the occurrence of voltage imbalance of the three-phase AC power supply.

Referring to Fig. 22, the PWM cycloconverter of the present embodiment includes: three-phase AC power supply 1; input filter 2; bidirectional switches SUR, SUS, SUT, SVR, SVS, SVT, SWR, SWS, and SWT; loads R1, R2, and R3; current detectors CT1, CT2, and CT3; voltage detection circuit 400;* rectifying circuit 401; multiplier 402 comparator 403, voltage command unit 410; PWM control circuit 411; commutation control circuit 450; and gate drive circuit 60.

Three-phase AC power supply 1 outputs an AC power supply in an phase R, phase S, and phase T. Input filter 2 is composed of reactors L1, L2, and L3 that are each connected in a series to phases R, S, and T, respectively, of three-phase AC power supply 1; and capacitors C1, C2, and C3 each having one end connected to each of phases R, S, and T, respectively, and the other end connected in common; and has the function of shaping the waveform of the output of three-phase AC power supply 1 and outputting signals of three phases.

Bidirectional switches SUR, SUS, SUT, SVR, SVS, SVT, SWR, SWS, and SWT are each made up by two IGBT (insulated gate bipolar transistors), and are capable of effecting ON/OFF control of bidirectional signals by commutation control. The phase R output of input filter 2 is applied as input to one end of bidirectional switches SUR, SVR, and SWR. The phase S output of input filter 2 is applied as input to one end of bidirectional switches SUS, SVS, and SWS. The phase T output of input filter 2 is applied as input to one end of bidirectional switches SUT, SVT, and SWT. The other ends of bidirectional switches SUR, SUS, and SUT are connected in common as the phase U output and are connected to one end of load R1. The other ends of bidirectional switches SVR, SVS, and SVT are connected in common as the phase V output and are connected to one end of load R₂. The other ends of bidirectional switches SWR, SWS, and SWT are connected in common as the phase W output and are connected to one end of load R3.

The other ends of loads R1, R2, and R3 are connected in common. Current detectors CT1, CT2, and CT3 detect the currents of the U phase, the V phase, and the W phase, respectively, and notify commutation control circuit 450. Voltage detection circuit 400 detects the line voltages between the phase R and the phase S, between the phase S and the phase T, and between the phase T and the phase R and outputs the result.

Rectifying circuit 401 rectifies the three line voltages of the output of voltage detection circuit 400 and outputs the largest value of these voltages as maximum line voltage V_{MAX}. Multiplier 402 multiplies the maximum line voltage V_{MAX} by 1/√2.

Voltage command unit 410 commands voltage V_{REF}, which is the desired effective value of the three-phase output regardless of the output of three-phase AC power supply 1. Comparator 403 compares voltage V_{MAX}/√2 with voltage V_{REF} and outputs the smaller voltage as voltage V₁.

PWM control circuit 411 outputs PWM signals for implementing ON/OFF control of bidirectional switches SUR, SUS, SUT, SVR, SVS, SVT, SWR, SWS, and SWT such that the three-phase output is at voltage V1, and moreover, such that the phase U, phase V, and phase W signals of the frequency command f_{REF} are generated. In the present embodiment, the PWM signals are output to a bus that is constituted by a plurality of signal lines.

Commutation control circuit 450 converts the PWM signals to signals that correspond to the bidirectional switches, gives these signals commutation control of the IGBT of each direction of bidirectional switches SUR, SUS, SUT, SVR, SVS, SVT, SWR, SWS, and SWT based on the current polarity that is obtained at current detectors CT1, CT2, and CT3, and outputs signals for implementing ON/OFF control of each IGBT.

Gate drive circuit 60 turns ON and OFF the eighteen IGBT that make up bidirectional switches SUR, SUS, SUT, SVR, SVS, SVT, SWR, SWS, and SWT based on the output of commutation control circuit 450.

Regarding the operation of the PWM cycloconverter of the present embodiment, the outputs of three-phase AC power supply 1 are first wave-shaped by filter 2. Based on the wave-shaped signals, voltage detection circuit 400, rectifying circuit 401, and multiplier 402 generate V_{MAX}/√2, which is the effective value of the maximum three-phase output that is obtained from three-phase AC power supply 1. At comparator 403, V_{MAX}/√2 is compared with the voltage V_{REF} that is commanded by voltage command unit 410, and the smaller voltage is applied as input to PWM control circuit 411 as voltage V₁. When three-phase AC power supply 1 is outputting the three-phase power supply normally, voltage V_{MAX}/√2 does not fall below the V_{REF} commanded by voltage command unit 410, but voltage V_{MAX}/√2 may fall below V_{REF} commanded by voltage command unit 410 when voltage V_{MAX}/√2 decreases due to, for example, an unbalanced state.

PWM control circuit 411 outputs PWM signals indicating the timing for turning ON/OFF bidirectional switches SUR, SUS, SUT, SVR, SVS, SVT, SWR, SWS, and SWT based on frequency command f_{REF} and voltage V₁. Further, signals that have been given the commutation timing based on the polarity of the currents detected by current detectors CT1, CT2, and CT3 turn ON/OFF the IGBT that constitute bidirectional switches SUR, SUS, SUT, SVR, SVS, SVT, SWR, SWS, and SWT by way of gate drive circuit 60. Signals that have been obtained as three-phase output are provided to loads R1, R2, and R3.

When the output of three-phase AC power supply 1 becomes unbalanced and voltage V_{MAX}/√2 falls below voltage V_{REF} that has been commanded by voltage command unit 410, PWM cycloconverter is unable to operate normally at voltage V_{REF} that is commanded by voltage command unit 410. Because PWM control is effected based on the maximum voltage V_{MAX}/√2 that can be normally output at this time, the operation of PWM cycloconverter can be continued.

Rectifying circuit 401 that outputs maximum line voltage V_{MAX} may be constituted by an absolute value circuit and a maximum value priority circuit.

### (Eighth Embodiment)

Explanation next regards a power supply abnormality detection circuit that is used in the PWM cycloconverter of the eighth embodiment of the present invention. As with the embodiment of Fig. 7, the PWM cycloconverter of the present embodiment is capable of normal operation and can continue driving a device such as a motor despite the occurrence of a voltage imbalance in the three-phase AC power supply.

Referring to Fig. 23, the PWM cycloconverter of the eighth embodiment of the present invention is a construction in which function generator 420, frequency command unit 421, and comparator 404 are added to the PWM cycloconverter of Fig. 22.

Function generator 420 receives as input the output voltage V_{MAX}/√2 of multiplier 402, calculates the maximum frequency f_{MAX} that is currently obtained in the output state of three-phase AC power supply 1, and outputs the result. As an example of maximum frequency f_{MAX}, maximum frequency f_{MAX} can be considered to reach a maximum when the output of three-phase AC power supply 1 is normal and then decrease linearly in proportion to the decrease in voltage V_{MAX}/√2.

Frequency command unit 421 commands a desired value frequency f_{REF} of the three-phase output regardless of the output of three-phase AC power supply 1.

Comparator 404 compares maximum frequency f_{MAX} and frequency f_{REF} that is commanded by frequency command unit 421 and outputs the smaller frequency as frequency f₁. Frequency f₁ is applied as input to PWM control circuit 411. When three-phase AC power supply 1 is outputting a three-phase power supply normally, maximum frequency f_{MAX} does not fall below the command f_{REF} of frequency command unit 421, but may fall below the command f_{REF} of frequency command unit 421 when maximum frequency F_{MAX}, drops due to, for example, an imbalanced state.

When the output of three-phase AC power supply 1 enters an imbalanced state and maximum frequency f_{MAX} falls below the frequency f_{REF} that is commanded by frequency command unit 421, PWM cycloconverter cannot operate normally at frequency f_{REF} that is commanded by frequency command unit 421. At such a time, the operation of PWM cycloconverter can be continued by implementing PWM control based on maximum frequency f_{MAX} of the three-phase output that can be normally output at that time.

### (Ninth Embodiment)

Explanation next regards the power supply abnormality detection circuit that is used in the PWM cycloconverter of the ninth embodiment of the present invention. As with the embodiments of Fig. 7 and Fig. 8, the PWM cycloconverter of the present embodiment is for enabling normal operation and continued drive of, for example, a motor despite the occurrence of an unbalanced voltage state of the three-phase AC power supply.

Referring to Fig. 24, the PWM cycloconverter of the ninth embodiment of the present invention includes: three-phase AC power supply 1; input filter 2; bidirectional switches SUR, SUS, SUT, SVR, SVS, SVT, SWR, SWS, and SWT; current detectors CT1, CT2, and CT3; voltage detection circuit 400; rectifying circuit 401; multiplier 402; commutation control circuit 450; gate drive circuit 60; speed detector 461; function generators 430 and 440; speed command unit 431; comparator 405; speed control unit 432; magnetic flux command unit 441; comparator 406; frequency command unit 421; voltage command unit 410; and PWM control circuit 411; and drives motor 460.

Three-phase AC power supply 1; input filter 2; bidirectional switches SUR, SUS, SUT, SVR, SVS, SVT, SWR, SWS, and SWT; current detectors CT1, CT2, and CT3; voltage detection circuit 400; rectifying circuit 401; multiplier 402; commutation control circuit 450 and gate drive circuit 60 are each identical to the components in the PWM cycloconverter of Fig. 22.

Motor 460 is an AC motor that is driven by voltages of phases U, phases V, and phases W. Speed detector 461 detects the speed at which motor 460 rotates.

Function generator 430 takes voltage V_{MAX}/√2 as input and outputs maximum speed N_{MAX} of motor 460 that is obtained at the current state of output of three-phase AC power supply 1. In addition, a minimum value of maximum speed N_{MAX} can be set in a function that indicates the relation between this input and output, and the maximum speed N_{MAX} when voltage V_{MAX}/√2 falls below a prescribed value is the preset minimum value. The case that is shown in Fig. 25 may be considered as an example of this function.

Speed command unit 431 commands speed N_{REF} at which motor 460 is to be driven regardless of the output of three-phase AC power supply 1.

Comparator 405 compares maximum speed N_{MAX} and the output N_{REF} of speed command unit 431, and outputs the lower speed as speed N₁. When three-phase AC power supply 1 is outputting a three-phase power supply normally, maximum speed N_{MAX} does not fall below the command N_{REF} of speed command unit 431, but when maximum speed N_{MAX} drops due to, for example, an unbalanced state, it may fall below command N_{REF} of speed command unit 431.

Speed control unit 432 takes as input speed N₁ and the rotational speed of motor 460 that has been detected by speed detector 461 and effects control such that the rotational speed of motor 460 becomes N₁.

Function generator 440 receives the voltage of motor 460 V_{MAX}/√2 as input and outputs maximum magnetic flux Φ_{MAX} that can be obtained from the current state of output of three-phase AC power supply 1. A minimum value of maximum magnetic flux Φ_{MAX} may be set in a function that indicates this input/output relation, and when voltage V_{MAX}/√2 falls below a prescribed value, maximum magnetic flux Φ_{MAX} becomes the minimum value that has been set in advance. The case that is shown in Fig. 26 may be considered as an example of this function.

Magnetic flux command unit 441 commands magnetic flux according to the torque that is to be given to motor 460 regardless of the output of three-phase AC power supply 1.

Comparator 406 compares maximum magnetic flux Φ_{MAX} and the output of magnetic flux command unit command unit 441 and outputs the smaller magnetic flux as magnetic flux Φ₁. When three-phase AC power supply 1 is outputting three-phase power supply normally, maximum magnetic flux Φ_{MAX} does not fall below the command Φ_{REF} of magnetic flux command unit 441, but when maximum magnetic flux Φ_{MAX} decreases due to, for example, an unbalanced state, it may fall below command Φ_{REF} of magnetic flux command unit 441.

Vector control circuit 442 takes as input speed N₁ and magnetic flux Φ₁, and calculates and commands a current to flow to motor 460 such that motor 460 rotates at a torque based on speed N₁ and magnetic flux Φ₁. Since the sum of the currents of three balanced phases is zero, the current command notifies two of the three phases U, V, and W.

Current control circuit 443 outputs voltage command V_{REF} and frequency command f_{REF} that are given to PWM control circuit 411 based on the deviation between the current command that is output by vector control circuit 442 and the current values that are detected by current detectors CT1, CT2, and CT3.

When the output of three-phase AC power supply 1 enters an unbalanced state and PWM cycloconverter cannot operate normally at the command of speed command unit 431, the operation of PWM cycloconverter can be continued by implementing PWM control based on the maximum speed N_{MAX} that the three-phase output can give to motor 460 in this state.

When voltage V_{MAX}/√2 falls below a prescribed value, PWM control is implemented such that motor 460 rotates at the speed of the preset minimum value. As a result, when three-phase AC power supply 1 is cut off instantaneously, motor 460 can continue rotation without halting by means of momentum until three-phase AC power supply 1 recovers.

Further, when torque resulting from the magnetic flux Φ_{REF} that is commanded by magnetic flux command unit 441 cannot be given to motor 460, PWM cycloconverter can continue operation by implementing PWM control based on maximum magnetic flux Φ _{MAX} that corresponds to the maximum torque that the three-phase output can give to motor 460 in the current state. Furthermore, PWM control is implemented such that motor 460 rotates at the magnetic flux of the preset minimum value when voltage V_{MAX}/√2 falls below a prescribed value. As a result, when three-phase AC power supply 1 is cut off instantaneously, PWM control allows rotation of motor 460 to continue by momentum until three-phase AC power supply 1 recovers without halting motor 460.

## Claims

1. A PWM cycloconverter including:
a bidirectional switch module that is constituted by nine bidirectional switches for connecting between each of voltages of three phases of a three-phase AC power supply and output voltages of three phases. and
an input power supply phase detection circuit for receiving as input two phases of the AC voltages of three phases that are applied as input to said bidirectional switch module and detecting the phase of this input,
**characterized in that** it includes:
an uninterruptible power supply, which is a single-phase AC power supply
a power supply abnormality detection circuit for outputting a power supply abnormality detection signal when a power supply abnormality of said three-phase AC power supply has been detected;
a power supply switch for outputting the output voltages of three phases from said three-phase AC power supply to said bidirectional switch module when said power supply abnormality detection signal is not received as input, and, when said power supply abnormality detection signal is received, outputting single-phase AC voltage from said uninterruptible power supply to said bidirectional switch module in place of the output voltages of two phases for which said input power supply phase detection circuit detects phase and
a control unit for controlling said bidirectional switch module based on phase information that has been detected by said input power supply phase detection circuit, implementing control such that said bidirectional switch module operates under three-phase input when said power supply abnormality detection signal is not received as input, and switching the control mode of said bidirectional switch module from three-phase input operation to single-phase input operation when said power supply abnormality detection signal is received.

2. A PWM cycloconverter including:
a bidirectional switch module that is constituted by nine bidirectional switches for connecting between each of voltages of three phases of a three-phase AC power supply and output voltages of three phases and
an input power supply phase detection circuit for receiving as input two phases of the AC voltages of three phases that are applied as input to said bidirectional switch module and detecting the phase of this input,
**characterized in that** it includes:
an uninterruptible power supply, which is a single-phase AC power supply
a power supply abnormality detection circuit for outputting a power supply abnormality detection signal when a power supply abnormality of said three-phase AC power supply has been detected
a power supply switch for outputting the output voltages of three phases from said three-phase AC power supply to said bidirectional switch module when said power supply abnormality detection signal is not received as input, and, when said power supply abnormality detection signal is received, outputting single-phase AC voltage from said uninterruptible power supply to said bidirectional switch module in place of the output voltages of two phases for which said input power supply phase detection circuit detects phase
an uninterruptible power supply phase detection circuit for detecting the phase of said uninterruptible power supply
a phase detection circuit switch for selecting and outputting phase information that is output from said uninterruptible power supply phase detection circuit when said power supply abnormality detection signal is received as input and selecting and outputting phase information that is output from said input power supply phase detection circuit when said power supply abnormality detection signal is not received and
a control unit for controlling said bidirectional switch module based on phase information that has been output by said phase detection circuit switch, implementing control such that said bidirectional switch module operates under three-phase input when said power supply abnormality detection signal is not received as input, and switching the control mode of said bidirectional switch module from three-phase input operation to single-phase input operation when said power supply abnormality detection signal is received.

3. A PWM cycloconverter including:
a bidirectional switch module that is constituted by nine bidirectional switches for connecting between each of voltages of three phases of a three-phase AC power supply and output voltages of three phases and
an input power supply phase detection circuit for receiving as input two phases of the AC voltages of three phases that are applied as input to said bidirectional switch module and detecting the phase of this input,
**characterized in that** it includes:
a DC power supply
a power supply abnormality detection circuit for outputting a power supply abnormality detection signal when a power supply abnormality of said three-phase AC power supply has been detected
a power supply switch for outputting the output voltages of three phases from said three-phase AC power supply to said bidirectional switch module when said power supply abnormality detection signal is not received as input, and, when said power supply abnormality detection signal is received, outputting DC voltage from said DC power supply to said bidirectional switch module in place of the output voltages of two phases for which said input power supply phase detection circuit detects phase
a fixed phase information generation circuit
a phase detection circuit switch for selecting and outputting fixed phase information that is output from said fixed phase information generation circuit when said power supply abnormality detection signal is received as input, and selecting and outputting phase information that is output from said input power supply phase detection circuit when said power supply abnormality detection signal is not received; and
a control unit for controlling said bidirectional switch module based on phase information that has been output by said phase detection circuit switch, implementing control such that said bidirectional switch module operates under three-phase input when said power supply abnormality detection signal is not received as input, and switching the control mode of said bidirectional switch module from three-phase input operation to single-phase input operation when said power supply abnormality detection signal is received.

4. A PWM cycloconverter including:
a bidirectional switch module that is constituted by nine bidirectional switches for connecting between each of voltages of three phases of a three-phase AC power supply and output voltages of three phases;
an input power supply phase detection circuit for receiving as input two phases of the three phases of AC voltages that are applied as input to said bidirectional switch module and detecting the phase of this input; and
a control unit for controlling said bidirectional switch module based on phase information that is detected by means of said input power supply phase detection circuit,
**characterized in that** it includes:
a power supply abnormality detection circuit for outputting a power supply abnormality detection signal and a switch control signal when a power supply abnormality of the three-phase AC power supply has been detected, halting the output of said power supply abnormality detection signal when the power supply abnormality has been restored to normal, and, after the subsequent passage of a fixed time interval, halting the output of said switch control signal;
an uninterruptible power supply module for generating voltages of three phases that are synchronized with the output voltages of said three-phase AC power supply by constantly detecting the phase of said three-phase AC power supply, and, when said power supply abnormality detection signal has been received as input, for outputting voltages of three phases at a fixed cycle based on phase information that immediately precedes input of said power supply abnormality detection signal; and
a power supply switch for outputting the output voltages of three phases from said three-phase AC power supply to said bidirectional switch module when said switch control signal is not received as input, and, when said switch control signal is received, outputting output voltages of three phases from said uninterruptible power supply module to said bidirectional switch module.

5. A PWM cycloconverter according to claim 4, wherein said uninterruptible
power supply is constituted by a PWM inverter.

6. An elevator driver that is constituted by a PWM cycloconverter having:
a bidirectional switch module that is constituted by nine bidirectional switches for connecting between each of voltages of three phases of a three-phase AC power supply and output voltages of three phases; and
an input power supply phase detection circuit for receiving as input two phases of the AC voltages of three phases that are applied as input to said bidirectional switch module and detecting the phase of this input,
**characterized in that** it includes:
a power supply abnormality detection circuit for outputting a power supply abnormality detection signal when a power supply abnormality in said three-phase AC power supply has been detected;
a power supply switch for outputting output voltages of three phases from said three-phase AC power supply to said bidirectional switch module when said power supply abnormality detection signal is not received as input, and, when said power supply abnormality detection signal is received, outputting the output voltage of a power supply that is set as the emergency power supply to said bidirectional switch module;
an emergency power supply phase detection circuit for detecting the phase of said emergency power supply;
a fixed phase information generation circuit for generating and outputting fixed phase information;
a phase detection circuit switch setting unit for selecting and outputting in accordance with settings that have been made beforehand either phase information from said emergency power supply phase detection circuit or fixed phase information from said fixed phase information generation circuit;
a phase detection circuit switch for selecting and outputting phase information that is output from said phase detection circuit switch setting unit when said power supply abnormality detection signal is received as input, and for selecting and outputting phase information that is output from said input powersupply phase detection circuit when said power supply abnormality detection signal is not received as input; and
a control unit for controlling said bidirectional switch module based on phase information that has been output from said phase detection circuit switch, implementing control such that said bidirectional switch module operates under three-phase input when said power supply abnormality detection signal is not received as input, and switching the control mode of said bidirectional switch module from three-phase input operation to operation of the control mode that accords with phase information that is output from said phase detection circuit switch when said power supply abnormality detection signal is received as input.

7. An elevator driver that is constituted by a PWM cycloconverter having:
a bidirectional switch module that is constituted by nine bidirectional switches for connecting between output voltages of three phases and either voltages of three phases of a three-phase AC power supply or output voltage from an emergency power supply that has been selected by a power supply switch that is connected to the outside; and
an input power supply phase detection circuit for receiving as input two phases of AC voltages of three phases that are applied as input to said bidirectional switch module and detecting the phase of this input,
**characterized in that** it includes:
a power supply abnormality detection circuit for outputting a power supply abnormality detection signal when a power supply abnormality in said three-phase AC power supply has been detected;
an emergency power supply phase detection circuit for detecting the phase of said emergency power supply;
a fixed phase information generation circuit for generating and outputting axed phase information;
a phase detection circuit switch setting unit for selecting and outputting in accordance with settings that have been made beforehand either phase information from said emergency power supply phase detection circuit or fixed phase information from said fixed phase information generation circuit;
a phase detection circuit switch for selecting and outputting phase information that is output from said phase detection circuit switch setting unit when said power supply abnormality detection signal is received as input, and for selecting and outputting phase information that is output from said input power supply phase detection circuit when said power supply abnormality detection signal is not received as input and
a control unit for controlling said bidirectional switch module based on phase information that has been output from said phase detection circuit switch, implementing control such that said bidirectional switch module operates under three-phase input when said power supply abnormality detection signal is not received as input, and switching the control mode of said bidirectional switch module from three-phase input operation to operation of the control mode that accords with phase information that is output from said phase detection circuit switch when said power supply abnormality detection signal is received as input.

8. An elevator driver according to claim 6 or claim 7, wherein said emergency power supply is any one power supply selected from a three-phase AC power supply, a single-phase AC power supply, and a DC power supply.

9. An elevator driver that is constituted by a PWM cycloconverter having:
a bidirectional switch module that is constituted by nine bidirectional switches for connecting between each of voltages of three phases of a three-phase AC power supply and output voltages of three phases; and
an input power supply phase detection circuit for receiving as input two phases of AC voltages of three phases that are applied as input to said bidirectional switch module and detecting the phase of this input,
**characterized in that** it includes:
a power supply abnormality detection circuit for outputting a power supply abnormality detection signal when a power supply abnormality in said three-phase AC power supply has been detected
a power supply switch for outputting output voltages of three phases from said three-phase AC power supply to said bidirectional switch module when said power supply abnormality detection signal is not received as input, and for outputting output voltages of an emergency three-phase AC power supply that is set as the emergency power supply to said bidirectional switch module when said power supply abnormality detection signal is received as input;
an emergency power supply phase detection circuit for detecting the phase of said emergency three-phase AC power supply;
a phase detection circuit switch for selecting and outputting phase information that is output from said emergency power supply phase detection circuit when said power supply abnormality detection signal is received as input, and for selecting and outputting phase information that is output from said input power supply phase detection circuit when said power supply abnormality detection signal is not received as input; and
a control unit for implementing control such that said bidirectional switch module operates under three-phase input based on phase information that is output from said phase detection circuit switch.

10. A power supply abnormality detection circuit for detecting abnormalities of power supply voltage of a three-phase AC power supply, comprising:
a power supply voltage information generation circuit for detecting information that corresponds to the size relation of the voltages of each phase of said three-phase AC power supply and outputting this information as a power supply voltage information signal;
an abnormality detection signal generation circuit for holding in advance information that is based on the size relations of the voltages of each phase when said three-phase AC power supply is normal, synchronizing the information with the output voltages of said three-phase AC power supply, and outputting this information as an abnormality detection signal; and
a determination circuit for comparing said power supply voltage information signal with said abnormality detection signal at fixed time intervals and outputting a power supply voltage abnormality signal when these signals differ.

11. A power supply abnormality detection circuit according to claim 10, wherein said determination circuit is. constituted by:
a plurality of exclusive-OR circuits for carrying out exclusive-OR calculation of said abnormality detection signal and said power supply voltage information signal and outputting the calculation results;
an OR circuit for carrying out OR calculation of each output of said plurality of exclusive-OR circuits and outputting the calculation results; and
a flip-flop circuit for holding the output value of said OR circuit for a fixed time interval and outputting said output value as said power supply voltage abnormality detection signal.

12. A power supply abnormality detection circuit according to claim 10 or claim 11, wherein information that is indicated by said power supply voltage information signal is information indicating which of the voltage values of each phase is the highest; and information indicating which of the voltage values of each phase is the lowest.

13. A power supply voltage abnormality detection method for detecting abnormalities of power supply voltages of a three-phase AC power supply; said method comprising steps of:
holding in advance information that is based on size relations of voltage values of each phase when said three-phase AC power supply is normal as abnormality detection information;
detecting information that corresponds to the size relations of voltage values of each phase of said three-phase AC power supply as power supply voltage information; and
comparing, at fixed time intervals, said power supply voltage information and, of said abnormality detection signal, abnormality detection information that corresponds to the timing of obtaining said power supply voltage information, and determining that a power supply voltage abnormality has occurred when this information differs.

14. An AC/AC direct power converter, comprising:
an input filter for shaping the output waveforms of the three phases of a three-phase AC power supply;
a plurality of bidirectional switches that are connected to signals of three phases that have been wave-shaped by said input filter for effecting power conversion by means of ON/OFF operation;
a PWM control circuit for implementing ON/OFF control of said bidirectional switches based on a voltage commanded and a frequency command
a commutation control circuit for controlling commutation of said bidirectional switches;
a voltage detection circuit for detecting and outputting the three line voltages of said three-phase AC power supply;
a maximum voltage generation circuit for generating the maximum line voltage from said line voltages; and
a control circuit for commanding a voltage to said PWM control circuit such that the three-phase output is always equal to or less than said maximum line voltage.

15. An AC/AC direct power converter according to claim 14, wherein:
said maximum voltage generation circuit is constituted by:
a rectifying circuit for rectifying said line voltages and
a multiplier for prescribed multiplication of the output of said rectifying circuit and
said control circuit is constituted by:
a voltage command unit for commanding a desired voltage and
a comparator for comparing the output of said multiplier and the voltage command of said voltage command unit and outputting the smaller of the two.

16. An AC/AC direct power converter, comprising:
an input filter for shaping the output waveforms of three phases of a three-phase AC power supply;
a plurality of bidirectional switches that are connected to signals of three phases that have been wave-shaped by said input filter for effecting power conversion by means of ON/OFF operation;
a PWM control circuit for implementing ON/OFF control of said bidirectional switches based on a voltage command and a frequency command
a commutation control circuit for controlling commutation of said bidirectional switches;
a voltage detection circuit for detecting and outputting the three line voltages of said three-phase AC power supply;
a maximum voltage generation circuit for generating the maximum line voltage from said line voltages; and
a control circuit for commanding a voltage and frequency to said PWM control circuit such that the output is always equal to or less than said maximum line voltage.

17. An AC/AC direct power converter according to claim 16, wherein:
said maximum voltage generation circuit is constituted by:
a rectifying circuit for rectifying said line voltages, and
a multiplier for prescribed multiplication of the output of said rectifying circuit and
said control circuit is constituted by:
a voltage command unit for commanding a desired voltage;
a first comparator for comparing the output voltage of said multiplier and the voltage command of said voltage command unit and outputting the smaller of the two;
a frequency command unit for commanding a desired frequency;
a function generator for computing the maximum frequency that can be obtained as the three-phase output from the output of said multiplier; and
a second comparator for comparing the frequency that is computed by said function generator and the frequency command of said frequency command unit and outputting the smaller of the two.

18. An AC/AC direct power converter, comprising;
an input filter for shaping output waveforms of the three phases of a three-phase AC power supply;
a plurality of bidirectional switches that are connected to signals of three phases that have been wave-shaped by said input filter for effecting power conversion by means of ON/OFF operation;
a PWM control circuit for implementing ON/OFF control of said bidirectional switches based on a voltage command and a frequency command;
a commutation control circuit for controlling commutation of said bidirectional switches;
a voltage detection circuit for detecting and outputting the three line voltages of said three-phase AC power supply;
a maximum voltage generation circuit for generating the maximum line voltage from said line voltages; and
a control circuit for commanding a speed and a magnetic flux to said PWM control circuit such that the terminal voltage of a motor that is connected to the output is always equal to or less than said maximum line voltage.

19. An AC/AC direct power converter according to claim 18, wherein:
said maximum voltage generation circuit is constituted by:
a rectifying circuit for rectifying said line voltages, and
a multiplier for prescribed multiplication of the output of said rectifying circuit;
and said control circuit is constituted by:
a speed command unit for commanding a desired speed,
a first function generator for computing the maximum speed that can be obtained as the three-phase output from the output of said multiplier,
a first comparator for comparing said maximum speed and the commanded speed of said speed command unit and outputting the smaller of the two,
a magnetic flux command unit for commanding a desired magnetic flux,
a second function generator for computing the maximum magnetic flux that the three-phase output can give to said motor from the output of said multiplier, and
a second comparator for comparing said maximum magnetic flux and the command of said magnetic flux command unit and outputting the smaller of the two.

20. An AC/AC direct power converter according to claim 19, wherein:
said first function generator commands a predetermined minimum speed when said maximum line voltage falls below a prescribed value and
said second function generator commands a predetermined minimum magnetic flux when said maximum line voltage falls below a prescribed value.
